# EUROPEAN PATENT SPECIFICATION

(11) **EP 4 112 749 B1**
(45) Date of publication and mention of the grant of the patent: **19.11.2025**
(21) Application number: 20921621.7
(22) Date of filing: 31.12.2020
(51) Int. Cl.: C21B 3/06, C21B 3/08, F01K 25/14

(54) **APPARATUS AND METHOD FOR GRANULATION AND WASTE HEAT RECOVERY AND UTILIZATION OF BLAST FURNACE SLAG**
VORRICHTUNG UND VERFAHREN ZUR GRANULIERUNG UND ABWÄRMERÜCKGEWINNUNG UND NUTZUNG VON HOCHOFENSCHLACKE
DISPOSITIF ET PROCÉDÉ DE GRANULATION DES LAITIERS DE HAUT FOURNEAU ET DE RÉCUPÉRATION ET D'UTILISATION DE LA CHALEUR PERDUE

(30) Priority: 28.02.2020 CN 202010129701
(43) Date of publication of application: 04.01.2023
(73) Proprietor: BAOSHAN IRON & STEEL CO., LTD., Shanghai 201900 (CN)
(72) Inventor: XIAO, Yongli, Shanghai 201900 (CN); LI, Yongqian, Shanghai 201900 (CN); ZHANG, Youping, Shanghai 201900 (CN); GUAN, Yunze, Shanghai 201900 (CN); XIE, Mengqin, Shanghai 201900 (CN); WANG, Yingjie, Shanghai 201900 (CN)
(74) Representative: Kuhnen & Wacker Patent- und Rechtsanwaltsbüro PartG mbB
(86) International application number: PCT/CN2020/141914
(87) International publication number: WO 2021/169589

(56) References cited:
- CN-A- 102 433 401
- CN-A- 102 433 401
- CN-A- 103 014 201
- CN-A- 103 557 711
- CN-A- 107 487 986
- CN-A- 108 060 280
- CN-A- 108 277 311
- CN-U- 208 087 651
- JP-A- 2015 231 923
- US-A- 4 046 542

## Description

### Technical Field

The present invention relates to an apparatus and method for granulation of a blast furnace slag and recycling of waste heat.

### Background Art

Blast furnace slag is the main by-product of blast furnace ironmaking. One ton iron is accompanied by about 350 kg blast furnace slag. The temperature of blast furnace slag leaving the furnace is 1450 °C to 1550 °C. The sensible heat ((1260-1880)×10³ kJ) carried by one ton slag is equivalent to the heat generated by 60 kg standard coal, so recovery of the sensible heat is very valuable.

Nowadays, blast furnace slag is treated mostly by a water quenching process in which the furnace slag is flushed with high-pressure water and forms water slag, and accordingly, the high-value sensible heat is transferred to the water slag and wastewater having a temperature of about 80 °C, losing its value for recovery. In addition, 0.4 to 0.5 tons of water is consumed for treatment of one ton of slag, and a large quantity of waste steam rich in H₂S, SO₂ and other pollutants is emitted at the same time. For subsequent resource utilization (such as micronization), 8-15% of the water in the water slag needs to be dried off by consuming about 1000 m³ of hot air having a temperature of 500 °C per ton slag, leading to waste of a large amount of resources.

Blast furnace slag is a high-temperature melt formed from gangue in an ore, ash in a fuel and non-volatile components in a solvent (usually limestone) during blast furnace ironmaking. Said high temperature is about 1450 °C. The main components of the blast furnace slag include silicon dioxide (SiO₂), aluminum oxide (Al₂O₃), calcium oxide (CaO), magnesium oxide (MgO), manganese oxide (MnO), iron oxide (FeO) and sulfur, etc., wherein the mass ratio of silicon dioxide (SiO₂) and aluminum oxide (Al₂O₃) to calcium oxide (CaO) and magnesium oxide (MgO) is about 0.8-1.2. Therefore, blast furnace slag is characterized by a low coefficient of heat conductivity and sharp increase in viscosity with decreasing temperature, resulting in slow heat transfer of blast furnace slag and high difficulty in waste heat recovery.

Rapid dry granulation of slag particles can provide conditions for heat recovery. Nowadays, the processes for rapid dry granulation of slag mainly include air granulation and centrifugal granulation. The air granulation process has not been put into practice widely in the field of blast furnace slag treatment due to its high noise and easy generation of slag wool. It is only suitable for treatment of some steel slag with good fluidity. For centrifugal granulation, a rotating disc or a rotating cup is mainly used as a granulator which makes use of centrifugal force to disperse and break the slag into fine droplets to facilitate rapid cooling, so that the glass phase content and activity of the cooled slag particles meet the requirements of a slag micropowder raw material. However, there are problems such as slag crusting, nonuniform particle size of the granulated slag particles, and easy generation of slag wool.

CN 104 357 605 A discloses a system and method for recovering waste heat from high-temperature slag. The apparatus includes a slag conveying unit, a slag granulation unit and a waste heat recovery unit. It can recover the sensible heat of the high-temperature slag. However, during recovery of the waste heat, the slag is transported in a slag tank over a long distance, and it is easy to cool down. So, additional heat needs to be supplemented. The energy consumption is high, and the recovery efficiency of the waste heat is low.

CN 101 993 964 A discloses a system for dry granulation of metallurgical slag and recovery of heat energy. The liquid slag is dry granulated by centrifugal rotation and airflow pulse. Airflow nozzles and atomized water nozzles are respectively arranged annularly around the rotating shaft of a centrifugal rotating disk under the centrifugal rotating disk. A watercooling wall is provided at the inner side wall of the dry granulation apparatus. A fluidized device with an annular conical surface is provided under the water-cooling wall, and an annular fluidized bed is provided at the bottom of the dry granulation apparatus. The utilization of the waste heat recovered from the slag according to this invention patent is limited to conversion into steam with hot air/nitrogen or power generation, and the efficiency is low.

As a kind of solid waste, sludge has become the second largest source of solid waste pollution after urban waste pollution. The traditional methods for treating sludge mainly include landfill, incineration, sea discharge, and agricultural use. In the field of sewage treatment involving industrial sewage, domestic sewage or the like, sludge treatment is also commonly involved. Along with the technological development, the prior art processes for sludge treatment include fermentation, melting, addition of lime, carbonization, etc. However, the equipment cost and energy consumption are very high, the treatment efficiency is low, and secondary pollution to air and water sources may be caused.

CN 103 557 711A provides a molten slag rapid cooling, granulation and waste heat recovery power generation system and method. The molten slag rapid cooling, granulation and waste heat recovery power generation system comprises a slag receiving device, a heat carrier slag rapid cooling and granulation device, a slag slow-cooling device, a waste heat recovery power generation device and a waste gas purification treatment device. The molten slag is rapidly cooled and granulated by the heat carrier slag rapid cooling and granulation device and is rapidly cooled to a glass body state; the molten slag is further cooled slowly by heat exchange to facilitate the follow-up sensitive heat recovery.

CN 102 433 401 A provides a melting furnace slag quenching dry type granulation and sensible heat recovery generating system and a method using the same and belongs to the technical field of steel metallurgy furnace slag treatment and complementary energy recovery. The melting furnace slag quenching dry type granulation and sensible heat recovery generating system comprises a slag-receiving device, a high-pressure water-air pulverization furnace slag quenching and granulating device, a furnace slag slow-cooling device, a sensible heat recovery generating device and a waste gas purification treatment device.

### Summary

One object of the present invention is to provide an apparatus and method for granulation of a blast furnace slag and recycling of waste heat, by which full granulation of blast furnace slag is achieved, wherein recovery of sensible heat of the slag is coupled organically with drying of sludge and preparation of steam and hot water, so that waste heat is recovered from medium-to-high-temperature gas and high-temperature granular slag in the process of slag granulation, thereby greatly improving the efficiency of recovery and utilization of waste heat.

The above object of the present invention is solved by the apparatus of claim 1 or the method of claim 9. Further improvements are subject to the dependent claims.

Compared with the prior art, the present invention shows the following beneficial effects:
1. With the use of the apparatus for granulation of a blast furnace slag and recycling of waste heat according to the present invention, the blast furnace slag is impinged by an aerosol and cyclone separated to form a completely solidified high-temperature granular slag and a medium-to-high-temperature gas. The granular slag has a uniform particle size, and formation of slag wool during granulation is avoided. The separated high-temperature granular slag and medium-to-high-temperature gas can be used directly in each step of sludge drying with high waste heat recovery efficiency, and can also be used for high-temperature steam power generation, hot water recovery, etc.
2. The apparatus for granulation of a blast furnace slag and recycling of waste heat according to the present invention organically couples recovery of the sensible heat of the slag with drying of the sludge. The blast furnace slag is granulated rapidly and safely while the sludge is dried efficiently. This not only improves the waste heat recycling efficiency greatly, but also reduces the waste heat recovery cost. The problem of low efficiency and high cost for drying sludge is solved.
3. In the method for granulation of a blast furnace slag and recycling of waste heat according to the present invention, the blast furnace slag is completely granulated into a high-temperature granular slag suitable for waste heat recovery with high efficiency. By recovering the waste heat of the medium-to-high-temperature gas and the high-temperature granular slag, the sensible heat of the slag is utilized at the same level to the maximum extent, and better economic and social benefits are produced.

In summary, full granulation of a blast furnace slag is realized according to the present invention, and a uniform particle size is achieved. Recovery of the sensible heat of the slag and drying of the sludge are combined organically, so that the waste heat of the medium-to-high-temperature gas and high-temperature granular slag is recovered in the process of slag treatment. The efficiency of recycling the waste heat is improved greatly, and good economic and social benefits are achieved. The apparatus and method can be popularized and applied in the field of slag treatment for blast furnaces of various sizes, and have broad prospects.

### Description of the Drawings

Fig. 1 is a process flow diagram for Example 1 of the apparatus for granulation of a blast furnace slag and recycling of waste heat according to the present invention;
Fig. 2 is a process flow diagram for Example 2 of the apparatus for granulation of a blast furnace slag and recycling of waste heat according to the present invention;
Fig. 3 is a process flow diagram for Example 3 of the apparatus for granulation of a blast furnace slag and recycling of waste heat according to the present invention;
Fig. 4 is a flow diagram of the method for granulation of a blast furnace slag and recycling of waste heat according to the present invention. In the figures, the dashed line represents a pipeline for conveying a gas stream, and the solid line represents a pipeline for conveying slag granules.

In the figures, 1 slag stream, 2 slag flow controller, 3 compressed air flow control valve, 4 water volume control valve, 5 aerosol spray gun, 6 slag granules, 7 flow guide, 8 cyclone separator, 9 screw mixer, 10 sludge dryer, 11 slag bin, 12 dry sludge powder bin, 13 slag-sludge separator, 14 sludge pre-dryer, 15 sludge pump, 16 sludge tank, 17 tail gas treatment device, 18 tail gas purifier, 19 exhauster, 20 chimney, 21 high-temperature feed conveyor, 22 high-temperature granular slag heat exchanger, 23 boiler, 24 economizer.

### Detailed Description

The invention will be further illustrated with reference to the accompanying drawings and the specific embodiments.

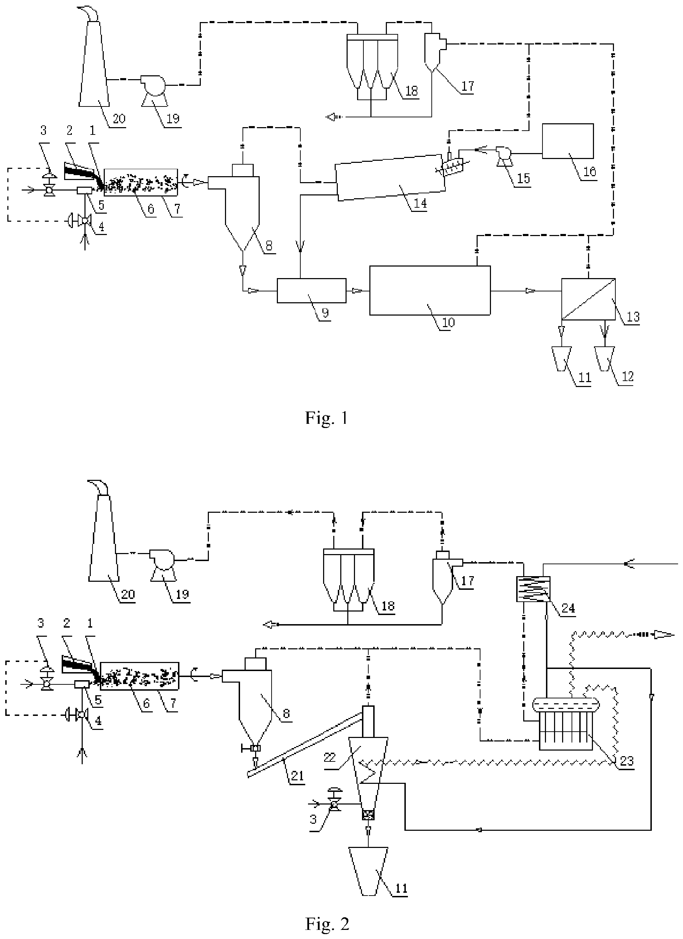

See Fig. 1 which shows an apparatus for granulation of a blast furnace slag and recycling of waste heat, comprising an aerosol granulation nozzle module, a flow guide 7, a cyclone separator 8 and a waste heat recovery device.

The aerosol granulation nozzle module comprises a slag flow controller 2, a compressed air flow control valve 3, a water volume control valve 4 and an aerosol spray gun 5. The flow of a slag stream 1 is controlled by the slag flow controller 2, and then the slag stream 1 flows into a slag inlet of the flow guide 7. A high-pressure gas flows through the compressed air flow control valve 3 and enters a gas inlet of the aerosol spray gun 5. A small amount of water flows through the water volume control valve 4 and enters a liquid inlet of the aerosol spray gun 5. The nozzle of the aerosol spray gun 5 is configured to face the inlet of the flow guide 7, and the slag stream 1 is impinged by the aerosol to form a medium-temperature gas and a high-temperature granular slag 6 having a primarily solidified surface. The aerosol granulation nozzle module uses a high-pressure gas and a small amount of water to crash, granulate, and rapidly cool the blast furnace slag, such that the temperature of the blast furnace slag is rapidly decreased from 1450 °C to 1000-1200 °C, preferably 1100 °C, and the surface of the blast furnace slag is solidified primarily. The particle size of the granular slag is uniform.

The outlet of the flow guide 7 is coupled to the feed port of the cyclone separator 8. The medium-temperature gas and the high-temperature granular slag 6 having a primarily solidified surface are fully mixed in the flow guide to form a completely solidified high-temperature granular slag 6 and a medium-to-high-temperature gas which then enter the cyclone separator 8 by which the high-temperature granular slag 6 is separated from the medium-to-high-temperature gas. The discharge port of the cyclone separator 8 is coupled to the feed port of the waste heat recovery device, and the medium-to-high-temperature gas and the completely solidified high-temperature granular slag 6 are transported into the waste heat recovery device. The high-temperature granular slag 6 having a primarily solidified surface and the medium-temperature gas are fully mixed in the flow guide 7, and enter the cyclone separator 8 for full mixing and heat exchange, so that the high-temperature granular slag 6 is completely solidified, and formation of slag wool is avoided. It is more conducive to the recovery of heat. At the same time, separation of the medium-to-high-temperature gas stream and the high-temperature granular slag 6 is accomplished. The temperature of the separated high-temperature granular slag 6 is decreased to 700-950 °C, preferably 800-850 °C, favorable for the waste heat recovery module to recycle the waste heat.

The temperature of the slag stream 1 is 1450-1550 °C. The temperature of the medium-temperature gas formed by impinging the aerosol from the aerosol granulation nozzle module on the slag stream 1 is 200-400 °C. The temperature of the high-temperature granular slag 6 having a preliminarily solidified surface is 1000-1200 °C, preferably 1100 °C. The temperature of the medium-to-high-temperature gas mixed by the flow guide 7 is 300-500 °C, preferably 400 °C. The temperature of the completely solidified high-temperature granular slag 6 is 800-1100 °C, preferably 950 °C. After separated by the cyclone separator 8, the temperature of the high-temperature granular slag 6 is 700-950 °C, preferably 800-850 °C, and the temperature of the medium-to-high-temperature gas is 350-550 °C.

The waste heat recovery device is a sludge drying module which can be used for drying sludge directly. The problem that sludge treatment is difficult and energy consuming is solved. The sludge drying module comprises a screw mixer 9, a sludge dryer 10, a sludge pre-drying module, a slag-sludge recovery module and a tail gas treatment module. The discharge port of the cyclone separator 8 is coupled to a first feed port of the screw mixer 9 to transport the completely solidified high-temperature granular slag 6 into the screw mixer 9. An aerosol port of the cyclone separator 8 is coupled to an aerosol port of the sludge pre-drying module to transport the medium-to-high-temperature gas into the sludge pre-drying module, so that the medium-to-high-temperature gas is mixed with the wet sludge in the sludge pre-drying module to form a semi-dry sludge. A discharge port of the sludge pre-drying module is coupled to a second feed port of the screw mixer 9 to transport the semi-dry sludge into the screw mixer 9, so that the semi-dry sludge and the completely solidified high-temperature granular slag 6 are mixed in the screw mixer 9 to form a slag-sludge mixture. A discharge port of the screw mixer 9 is coupled to a feed port of the sludge dryer 10 to transport the slag-sludge mixture into the sludge dryer 10. The slag-sludge mixture is further mixed and dried in the sludge dryer 10 to form a dry sludge powder and low-temperature slag granules. A discharge port of the sludge dryer 10 is coupled to a feed port of the slag-sludge recovery module to transport the dry sludge powder and slag granules into the slag-sludge recovery module. A gas inlet of the tail gas treatment module is coupled to a gas outlet of the sludge pre-drying module, a gas outlet of the sludge dryer 10 and a gas outlet of the slag-sludge recovery module.

The sludge pre-drying module comprises a sludge pre-dryer 14, a sludge pump 15 and a sludge tank 16. The discharge port of the sludge tank 16 is coupled to the feed port of the sludge pre-dryer 14 through a pipeline on which the sludge pump 15 is provided, such that the wet sludge in the sludge tank 16 is transported into the sludge pre-dryer 14. The sludge pre-dryer 14 is provided with an aerosol port which is coupled to the aerosol port of the cyclone separator 8. The aerosol port and the feed port of the sludge pre-dryer 14 are located at the two ends of the sludge pre-dryer 14 respectively, so that the medium-to-high-temperature gas and the sludge move in opposite directions, and reverse heat exchange occurs between them. The contact area between the medium-to-high-temperature gas and the sludge is large, and they are mixed fully with high heat exchange efficiency. The sludge pre-dryer 14 is provided with a gas outlet which is coupled to the gas inlet of the tail gas treatment module. The wet sludge in the sludge tank 16 is pumped into the sludge pre-dryer 14 by the sludge pump 15, and exchanges heat with the medium-to-high-temperature gas in the sludge pre-dryer 14 to form a semi-dry sludge.

The slag-sludge recovery module comprises a slag bin 11, a dry sludge powder bin 12 and a slag-sludge separator 13. The slag-sludge separator 13 is provided with a feed port, two discharge ports, and a gas outlet. The discharge port of the sludge dryer 10 is coupled to the feed port of the slag-sludge separator 13. The two discharge ports of the slag-sludge separator 13 are coupled to the slag bin 11 and the dry sludge powder bin 12 respectively. The gas inlet of the tail gas treatment module is coupled to the gas outlet of the slag-sludge separator 13. The mixture of the dry sludge powder and the slag granules enters the slag-sludge separator 13 and then is separated by the slag-sludge separator 13. The dry sludge powder is temporarily stored in the dry sludge powder bin 12, and the slag granules are temporarily stored in the slag bin 11, which can facilitate later recovery and treatment. The wet tail gas in the slag-sludge separator 13 enters the tail gas treatment module.

The tail gas treatment module comprises a tail gas treatment device 17, a tail gas purifier 18, an exhauster 19 and a chimney 20. The gas inlet of the tail gas treatment device 17 is coupled to the gas outlet of the sludge pre-dryer 14 in the sludge pre-drying module, the gas outlet of the sludge dryer 10, the gas outlet of the slag-sludge separator 13 in the slag-sludge recovery module, the tail gas outlet of the boiler 23 and the tail gas outlet of the economizer 24 through pipes respectively. The gas outlet of the tail gas treatment device 17 is coupled to the gas inlet of the tail gas purifier 18. The gas outlet of the tail gas purifier 18 is coupled to the chimney 20 through the exhauster 19. The tail gas treatment device 17 collects the wet tail gas and purifies it primarily. The primarily purified tail gas is sent to the tail gas purifier 18 for deep purification, and then discharged through the chimney 20 by the exhauster 19.

Discharged ports are provided at the lower parts of both the tail gas treatment device 17 and the tail gas purifier 18. The discharge port can be coupled externally to a tanker through a pipe. The external tanker can extract the small amount of fine powder that is filtered from the tail gas treatment device 17 and the tail gas purifier 18, so as to ensure normal operation of the tail gas treatment device 17 and the tail gas purifier 18, and also facilitate later use and treatment of the fine powder.

Referring to Fig. 2, the waste heat recovery device is a high-temperature steam preparation module which can be used to prepare high-temperature steam for power generation. The high-temperature steam preparation module is coupled to the cyclone separator 8 and recovers the heat of the medium-to-high-temperature gas and the high-temperature granular slag 6 to produce a high-temperature steam having a temperature of 200-250 °C. The high-temperature steam is incorporated into a pipe network for use at the same level or for power generation. The tail gas outlet of the economizer 24 of the high-temperature steam preparation module is coupled to the tail gas treatment module.

The high-temperature steam preparation module comprises a slag bin 11, a tail gas treatment device 17, a tail gas purifier 18, an exhauster 19, a chimney 20, a high-temperature feed conveyor 21, a high-temperature granular slag heat exchanger 22, a boiler 23 and an economizer 24. The high-temperature feed conveyor 21 is provided between the discharge port of the cyclone separator 8 and the feed port of the high-temperature granular slag heat exchanger 22. The high-temperature granular slag 6 separated by the cyclone separator 8 is conveyed by the high-temperature feed conveyor 21 to the upper part of the high-temperature granular slag heat exchanger 22 and descends slowly. A coil containing circulating water is provided in the high-temperature granular slag heat exchanger 22. The high-temperature granular slag 6 undergoes reverse heat exchange with the coil and the gas stream rising from bottom to top, and is thus cooled down to 100 °C. The slag bin 11 is provided below the discharge port disposed at the bottom of the high-temperature granular slag heat exchanger 22. The cooled granular slag is sent to the slag bin 11 for later treatment. A gas port is provided at the top of the high-temperature granular slag heat exchanger 22, and is coupled to the boiler 23. The economizer 24 is coupled to the boiler 23. Pure water is sent from an external pipe network to the economizer 24, and is preheated by the low-to-medium temperature tail gas (below 250 °C) discharged from the boiler 23 to 80 °C or higher. One part of the preheated pure water is sent to the boiler 23 to be further heated and vaporized into a high-temperature steam (200-250 °C), and the other part enters the coil of the high-temperature granular slag heat exchanger 22 to absorb the heat of the high-temperature granular slag 6. When the water in the coil is vaporized and heated to about 250 °C, it enters a steam drum disposed at the upper part of the boiler 23, is mixed with the steam generated by the boiler 23 itself, and is then integrated into the external pipe network for use at the same level or for power generation. The gas inlet of the tail gas treatment device 17 is coupled to the tail gas outlet of the economizer 24. The gas outlet of the tail gas treatment device 17 is coupled to the gas inlet of the tail gas purifier 18. The gas outlet of the tail gas purifier 18 is coupled to the chimney 20 through the exhauster 19 for tail gas purification and discharge.

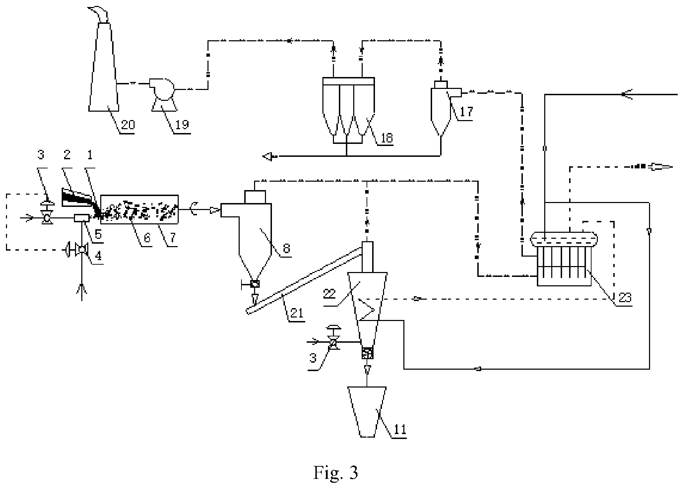

Referring to Fig. 3, the waste heat recovery device is a low-temperature hot water preparation module which can be used to prepare domestic hot water. The low-temperature hot water preparation module is coupled to the cyclone separator 8 and recovers the heat of the medium-to-high-temperature gas and the high-temperature granular slag 6 to prepare low-temperature hot water having a temperature of 70-95 °C. The low-temperature hot water is supplied to a user for use at the same level or for a cooling purpose. The tail gas outlet of the boiler 23 in the low-temperature hot water preparation module is coupled to the tail gas treatment module.

The low-temperature hot water preparation module comprises a slag bin 11, a tail gas treatment device 17, a tail gas purifier 18, an exhauster 19, a chimney 20, a high-temperature feed conveyor 21, a high-temperature granular slag heat exchanger 22 and a boiler 23. The high-temperature feed conveyor 21 is provided between the discharge port of the cyclone separator 8 and the feed port of the high-temperature granular slag heat exchanger 22. The high-temperature granular slag 6 separated by the cyclone separator 8 is conveyed by the high-temperature feed conveyor 21 to the upper part of the high-temperature granular slag heat exchanger 22 and descends slowly. A coil containing circulating water is provided in the high-temperature granular slag heat exchanger 22. The high-temperature granular slag 6 undergoes reverse heat exchange with the coil and the gas stream rising from bottom to top, and is thus cooled down to 200 °C or lower. The slag bin 11 is provided below the discharge port disposed at the bottom of the high-temperature granular slag heat exchanger 22. The cooled granular slag is sent to the slag bin 11 for later treatment. A gas port is provided at the top of the high-temperature granular slag heat exchanger 22, and is coupled to the waste heat boiler 23. One part of the pure water supplied from an external pipe network is sent to the boiler 23 to be heated to 70-95 °C, and the other part enters the coil of the high-temperature granular slag heat exchanger 22 to absorb the heat of the high-temperature granular slag 6. After the water in the coil absorbs heat and is thus heated to a higher temperature, it enters a steam drum disposed at the upper part of the boiler 23, is mixed with the hot water generated by the boiler 23 itself, and is then integrated into the external pipe network for use as domestic water or for a cooling purpose. The gas inlet of the tail gas treatment device 17 is coupled to the tail gas outlet of the boiler 23. The gas outlet of the tail gas treatment device 17 is coupled to the gas inlet of the tail gas purifier 18. The gas outlet of the tail gas purifier 18 is coupled to the chimney 20 through the exhauster 19 for tail gas purification and discharge.

Here, the tail gas purifier 18 may be a cloth bag or an electrostatic deduster.

Referring to Fig. 1, the cyclone separator 8 is provided with a feed port, a discharge port and an aerosol port. The feed port of the cyclone separator 8 is coupled to the discharge port of the flow guide 7. The discharge port of the cyclone separator 8 is coupled to the first feed port of the screw mixer 9, and the aerosol port of the cyclone separator 8 is coupled to the aerosol port of the sludge pre-dryer 14 of the sludge pre-drying module. The high-temperature granular slag 6 and the medium-to-high-temperature gas can be separated efficiently by cyclone separation.

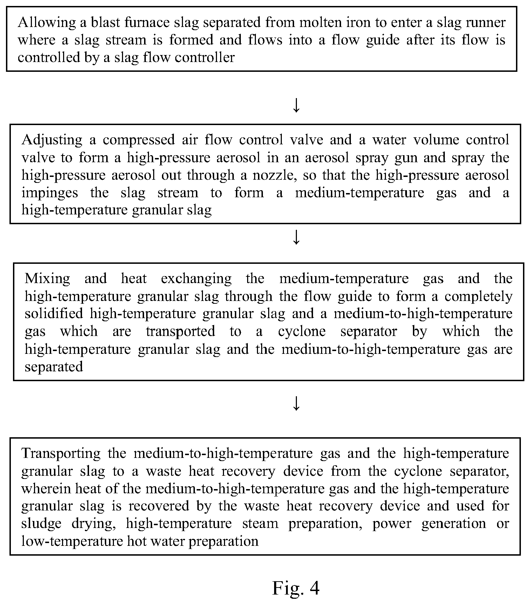

Referring to Fig. 4, a method for granulation of a blast furnace slag and recycling of waste heat comprises the following steps:
Step 1: allowing a blast furnace slag separated from molten iron to enter a slag runner where a slag stream 1 flows into a flow guide 7 after its flow is controlled by a slag flow controller 2;
Step 2: adjusting a compressed air flow control valve 3 and a water volume control valve 4 to form a high-pressure aerosol in an aerosol spray gun 5 and spray the high-pressure aerosol out through a nozzle, so that the high-pressure aerosol impinges the slag stream 1 flowing into the flow guide 7 to form a medium-temperature gas and a high-temperature granular slag 6 having a preliminarily solidified surface;
Step 3: mixing and heat exchanging the medium-temperature gas and the high-temperature granular slag 6 having a preliminarily solidified surface through the flow guide 7 to form a completely solidified high-temperature granular slag 6 and a medium-to-high-temperature gas which are transported to a cyclone separator 8 by which the high-temperature granular slag 6 and the medium-to-high-temperature gas are separated;
Step 4: transporting the medium-to-high-temperature gas and the high-temperature granular slag 6 to a waste heat recovery device from the cyclone separator 8, wherein the heat of the medium-to-high-temperature gas and the high-temperature granular slag 6 is recovered by the waste heat recovery device and used for sludge drying, high-temperature steam preparation, power generation or low-temperature hot water preparation.

The steps for the sludge drying include:
Step 4.1.1: pumping a wet sludge from a sludge tank 16 with a sludge pump 15 into a sludge pre-drier 14.

Step 4.1.2: mixing and reversely heat exchanging the wet sludge with the medium-to-high-temperature gas in the sludge pre-dryer 14 to form a semi-dry sludge.

In Step 4.1.2, the wet tail gas generated when the wet sludge is mixed with the medium-to-high-temperature gas is purified by the tail gas treatment module and then discharged.

Step 4.1.3: transporting the semi-dry sludge from the sludge pre-drying module to a screw mixer 9, and transporting the high-temperature granular slag 6 from the cyclone separator 8 to the screw mixer 9, wherein the semi-dry sludge and the high-temperature granular slag 6 are mixed by the screw mixer 9 to form a slag-sludge mixture.

Step 4.1.4: transporting the slag-sludge mixture from the screw mixer 9 to a sludge dryer 10, wherein the sludge dryer 10 dries the slag-sludge mixture into a dry sludge powder and slag granules which are transported to a slag-sludge recovery module.

In Step 4.1.4, the temperature of the slag granules is 200 °C or lower.

In Step 4.1.4, the wet tail gas generated when the slag-sludge mixture is dried by the sludge dryer 10 is purified by the tail gas treatment module and then discharged.

Step 4.1.5: separating the dry sludge powder from the slag granules in a slag-sludge separator 13 of the slag-sludge recovery module.

In Step 4.1.5, the wet tail gas generated when the dry sludge powder and the slag granules are separated by the sludge separator 13 is purified by the tail gas treatment module and then discharged.

Step 4.1.6: transporting the dry sludge powder from the sludge separator 13 to a dry sludge powder bin 12 for temporary storage.

Step 4.1.7: transporting the slag granules from the sludge separator 13 to a slag bin 11 for temporary storage.

The method for purifying and discharging the wet tail gas with the tail gas treatment module comprises: collecting and pretreating (such as cycloning to remove dust of millimeter-sized large particles) the wet tail gas from the sludge pre-dryer 14, the sludge dryer 10 and the slag-sludge separator 13 with a tail gas treatment device 17 of the tail gas treatment module, followed by deep purification with a tail gas purifier 18, wherein the up-to-standard purified tail gas is discharged through a chimney 20 by an exhauster 19; and the fine powder collected in the tail gas treatment device 17 and the tail gas purifier 18 is extracted out with an external tanker.

The steps for the high-temperature steam preparation include:
Step 4.2.1: transporting the high-temperature granular slag 6 from the cyclone separator 8 to a high-temperature granular slag conveyor 21 which lifts the high-temperature granular slag 6 and feeds it evenly to a high-temperature granular slag heat exchanger 22 from an upper inlet of the high-temperature granular slag heat exchanger 22, wherein the high-temperature granular slag 6 moves from top to bottom, and in the process of descending, it contacts and exchanges heat countercurrently with the cooling water in the coil and the air rising from bottom to top.

Step 4.2.2: discharging the heated high-temperature gas (300-600 °C) from the top of the high-temperature granular slag heat exchanger 22 and sending it to the boiler 23, and discharging the cooled granular slag from the lower part of the high-temperature granular slag heat exchanger to a slag bin 11. The temperature of the cooled slag is 200°C or lower.

Step 4.2.3: sending the pure water supplied from an external pipe network to an economizer 24 to be preheated to 80 °C or higher by a low-to-medium-temperature tail gas (250 °C or lower) discharged from the boiler 23, wherein one part of the preheated pure water is sent to the boiler 23 to be further heated and vaporized into a high-temperature steam (200-250 °C), and the other part enters the coil of the high-temperature granular slag heat exchanger 22 to absorb the heat of the high-temperature granular slag 6.

Step 4.2.4: sending the water in the coil to a steam drum at an upper part of the boiler 23 after it is vaporized and heated to about 250 °C, wherein it is mixed with the steam generated in the boiler 23 itself and then integrated into the external pipe network for use at the same level or for power generation.

The steps for the low-temperature hot water preparation include:
Step 4.3.1: transporting the high-temperature granular slag 6 from the cyclone separator 8 to a high-temperature granular slag conveyor 21 which lifts the high-temperature granular slag 6 and feeds it evenly to a high-temperature granular slag heat exchanger 22 from an upper inlet of the high-temperature granular slag heat exchanger 22, wherein the high-temperature granular slag 6 moves from top to bottom, and in the process of descending, it contacts and exchanges heat countercurrently with the cooling water in the coil and the air rising from bottom to top.

Step 4.3.2: discharging the heated low-temperature hot water (70-95 °C) from the top of the high-temperature granular slag heat exchanger 22 and sending it to the boiler 23, and discharging the cooled granular slag from the lower part of the high-temperature granular slag heat exchanger to a slag bin 11. The temperature of the cooled slag is 200°C or lower.

Step 4.3.3: sending one part of the pure water supplied from an external pipe network to the boiler 23 to be heated to 70-95 °C by a medium-to-high-temperature gas (300-600 °C) passing through the boiler 23, and sending the other part to the coil of the high-temperature granular slag heat exchanger 22 to absorb the heat of the high-temperature granular slag 6.

Step 4.3.4: sending the water in the coil to a steam drum at an upper part of the boiler 23 after it is heated by absorbing the heat, wherein it is mixed with the hot water generated in the boiler 23 itself and then integrated into the external pipe network for use as domestic water or for a cooling purpose.

### Example 1:

Referring to Fig. 1, when the blast furnace is tapping, the blast furnace slag enters the main runner along with the molten iron from the taphole, and is intercepted by the slag stopper. The slag having a temperature of 1450-1550 °C is separated from the molten iron, and enters the slag runner. Then, the slag enters an aerosol granulation nozzle module to be granulated. Particularly, the slag stream 1 flows out after its flow is controlled by a slag flow controller 2. After leaving the slag stream controller 2, the slag stream 1 is blown, granulated and preliminarily cooled by the high-pressure aerosol sprayed by the aerosol gun 5 during its falling to form a high-temperature granular slag 6 having a temperature of 1000-1200 °C and a medium-temperature gas having a temperature of 200-400 °C. The flow rate of the high-pressure aerosol is determined by the compressed air flow control valve 3 and the water volume control valve 4, and is automatically adjusted within a certain range depending on the volume of the slag stream 1. The medium-temperature gas stream entraining the granulated high-temperature granular slag 6 is guided by the flow guide 7 to a waste heat recovery device. The medium-temperature gas and the high-temperature granular slag 6 are further mixed and exchange heat while they are passing through the flow guide 7. The temperature of the gas rises to 300-500 °C to form a medium-to-high-temperature gas, and the temperature of the high-temperature granular slag 6 drops to 900-1100 °C. The high-temperature granular slag 6 is completely solidified. The aerosol-based slag granulation technology combines the advantages of the gas quenching-based slag granulation technology and the water quenching-based slag granulation technology. The granular slag having a high vitrification rate retains the resource nature of a water quenched slag, and the dry granular slag reduces the micronization cost and the environmental impact during transportation. The high-temperature granular slag and the medium-to-high-temperature gas stream generated in the granulation process create favorable conditions for recycling thermal energy.

The medium-to-high-temperature gas and the high-temperature granular slag 6 enter the cyclone separator 8. The cyclone separator 8 has a highly effective separation capability, and can separate the vast majority of the high-temperature granular slag 6 from the medium-to-high-temperature gas. The medium-to-high-temperature gas is led out from the upper part of the rotary separator 8 and enters the sludge pre-dryer 14 in which reverse contact and heat exchange occur between the medium-to-high-temperature gas and the wet sludge (converter sludge obtained by wet dedusting and having a water content of 60-90wt%, i.e. OG sludge) pumped by the sludge pump 15. The water content of the sludge drops to about 50%, and the gas temperature drops to 200 °C. The 800-950 °C high-temperature granular slag 6 collected by the cyclone separator 8 and the semi-dry sludge from the sludge pre-dryer 14 are stirred and mixed under the action of the screw mixer 9. The slag-sludge mixture is sent directly to the sludge dryer 10. The slag and the sludge contact and exchange heat directly in the sludge dryer 10. The mixing ratio of the slag to the sludge is 2:1--3:1. The sludge is dried to the set moisture index (e.g., 6%). The temperature of the slag granules drops to 200 °C or lower. After drying, the dry sludge powder and the granular slag are separated by the slag-sludge separator 13, and sent to the temporary bins, namely the slag bin 11 and the dry sludge powder bin 12, waiting for outbound transportation for subsequent resource utilization.

The temperature of the wet tail gas produced by the sludge pre-dryer 14, the sludge dryer 10 and the slag-sludge separator 13 is controlled to be 200 °C or higher. The wet tail gas is subjected to cyclone treatment by the tail gas treatment device 17 to remove the dust of millimeter-sized large particles. The temperature of the tail gas drops to 150-200 °C. After deep purification by the tail gas purifier 18 to remove at least 95% of various types of fine dust, the tail gas is pressurized by the exhauster 19, and discharged through the chimney 20 up to the standard. The tail gas purifier 18 may be a cloth bag or an electrostatic deduster.

The fine powder collected by the tail gas treatment device 17 and the tail gas purifier 18 is regularly extracted out with a tanker and sent directly to a subsequent unit for use.

### Example 2:

Referring to Fig. 2, when the blast furnace is tapping, the blast furnace slag enters the main runner along with the molten iron from the taphole, and is intercepted by the slag stopper. The slag having a temperature of 1450-1550 °C is separated from the molten iron, and enters the slag runner. Then, the slag enters an aerosol granulation nozzle module to be granulated. Particularly, the slag stream 1 flows out after its flow is controlled by a slag flow controller 2. After leaving the slag stream controller 2, the slag stream 1 is blown, granulated and preliminarily cooled by the high-pressure aerosol sprayed by the aerosol gun 5 during its falling to form a high-temperature granular slag 6 having a temperature of 1000-1200 °C and a medium-temperature gas having a temperature of 200-400 °C. The flow rate of the high-pressure aerosol is determined by the compressed air flow control valve 3 and the water volume control valve 4, and is automatically adjusted within a certain range depending on the volume of the slag stream 1. The medium-temperature gas stream entraining the granulated high-temperature granular slag 6 is guided by the flow guide 7 to a waste heat recovery device. The medium-temperature gas and the high-temperature granular slag 6 are further mixed and exchange heat while they are passing through the flow guide 7. The temperature of the gas rises to 300-500 °C to form a medium-to-high-temperature gas, and the temperature of the high-temperature granular slag 6 drops to 800-1100 °C. The high-temperature granular slag 6 is completely solidified. The aerosol-based slag granulation technology combines the advantages of the gas quenching-based slag granulation technology and the water quenching-based slag granulation technology. The granular slag having a high vitrification rate retains the resource nature of a water quenched slag, and the dry granular slag reduces the micronization cost and the environmental impact during transportation. The high-temperature granular slag and the medium-to-high-temperature gas stream generated in the granulation process create favorable conditions for recycling thermal energy.

The medium-to-high-temperature gas and the high-temperature granular slag 6 enter the cyclone separator 8. The cyclone separator 8 has a highly effective separation capability, and can separate the vast majority of the high-temperature granular slag 6 from the medium-to-high-temperature gas. The 700-950 °C high-temperature granular slag 6 separated from the cyclone separator 8 is transported to the upper part of the high-temperature granular slag heat exchanger 22 through the high-temperature feed conveyor 21. The high-temperature granular slag 6 descends slowly in the high-temperature granular slag heat exchanger 22, and as it descends, undergoes reverse heat exchange with the circulating water in the coil and the gas stream rising from the lower part. The high-temperature granular slag is cooled to about 200 °C and then sent to the slag bin 11 below. The rising gas stream is heated to 300-600 °C, discharged from the top of the high-temperature granular slag heat exchanger 22, merged with the medium-to-high-temperature gas stream discharged from the cyclone separator 8, and then sent to the boiler 23.

The pure water sent from the external pipe network passes through the economizer 24 first, and is preheated to 80 °C or higher by the low-to-medium-temperature tail gas discharged from the boiler 23. After the pure water is degassed, one part of it is sent to the boiler 23 to be heated and vaporized by 300-600 °C hot air into 200-250 °C steam, and the other part enters the heat exchange coil in the high-temperature granular slag heat exchanger 22. This part of the water absorbs the heat of the high-temperature granular slag 6 directly. After its temperature rises to about 250 °C, it enters the steam drum at the upper part of the boiler 23, wherein it is mixed with the steam generated by the boiler itself and then integrated into the external pipe network for use at the same level or for power generation.

The temperature of the wet tail gas discharged from the economizer 24 is controlled to be 200 °C or higher. The wet tail gas is subjected to cyclone treatment by the tail gas treatment device 17 to remove the dust of millimeter-sized large particles. The temperature of the tail gas drops to 150-200 °C. After deep purification by the tail gas purifier 18, the dust content is less than 10 mg. Finally, the tail gas is pressurized by the exhauster 19 and discharged through the chimney 20 up to the standard.

The small amount of fine powder collected by the tail gas treatment device 17 and the tail gas purifier 18 is regularly extracted out with a tanker and sent directly to a subsequent unit for use.

### Example 3:

Referring to Fig. 3, when the blast furnace is tapping, the blast furnace slag enters the main runner along with the molten iron from the taphole, and is intercepted by the slag stopper. The slag having a temperature of 1450-1550 °C is separated from the molten iron, and enters the slag runner. Then, the slag enters an aerosol granulation nozzle module to be granulated. Particularly, the slag stream 1 flows out after its flow is controlled by a slag flow controller 2. After leaving the slag stream controller 2, the slag stream 1 is blown, granulated and preliminarily cooled by the high-pressure aerosol sprayed by the aerosol gun 5 during its falling to form a high-temperature granular slag 6 having a temperature of 1000-1200 °C and a medium-temperature gas having a temperature of 200-400 °C. The flow rate of the high-pressure aerosol is determined by the compressed air flow control valve 3 and the water volume control valve 4, and is automatically adjusted within a certain range depending on the volume of the slag stream 1. The medium-temperature gas entraining the granulated high-temperature granular slag 6 is guided by the flow guide 7 to a waste heat recovery module. The medium-temperature gas and the high-temperature granular slag 6 are further mixed and exchange heat while they are passing through the flow guide 7. The temperature of the gas rises to 300-500 °C to form a medium-to-high-temperature gas. The temperature of the high-temperature granular slag 6 drops to 800-1100 °C, and the high-temperature granular slag 6 is completely solidified. The aerosol-based slag granulation technology combines the advantages of the gas quenching-based slag granulation technology and the water quenching-based slag granulation technology. The granular slag having a high vitrification rate retains the resource nature of a water quenched slag, and the dry granular slag reduces the micronization cost and the environmental impact during transportation. The high-temperature granular slag and the medium-temperature gas stream generated in the granulation process create favorable conditions for recycling thermal energy.

The medium-to-high-temperature gas and the high-temperature granular slag 6 enter the cyclone separator 8. The cyclone separator 8 has a highly effective separation capability, and can separate the vast majority of the high-temperature granular slag 6 from the medium-to-high-temperature gas. The 700-950 °C high-temperature granular slag 6 separated from the cyclone separator 8 is transported to the upper part of the high-temperature granular slag heat exchanger 22 through the high-temperature feed conveyor 21. The high-temperature granular slag 6 descends slowly in the high-temperature granular slag heat exchanger 22, and as it descends, undergoes reverse heat exchange with the circulating water in the coil and the gas stream rising from the lower part. The high-temperature granular slag is cooled to about 200 °C and then sent to the slag bin 11 below. The rising gas stream is heated to 300-600 °C, discharged from the top of the heat exchanger 22, merged with the medium-to-high-temperature gas stream discharged from the cyclone separator 8, and then enters the boiler 23.

One part of the pure water sent from the external pipe network is sent to the boiler 23 to be heated by 300-600 °C hot air into 70-95 °C hot water, and the other part enters the heat exchange coil in the high-temperature granular slag heat exchanger 22. This part of the water absorbs the heat of the high-temperature granular slag 6 directly. After its temperature rises to about 70-95 °C, it enters the upper part of the boiler 23, wherein it is mixed with the hot water generated by the boiler itself and then integrated into the external pipe network for use as domestic water or for a cooling purpose.

The temperature of the wet tail gas discharged from the boiler 23 is controlled to be 200 °C or higher. The wet tail gas is subjected to cyclone treatment by the tail gas treatment device 17 to remove the dust of millimeter-sized large particles. The temperature of the tail gas drops to 150-200 °C. After deep purification by the tail gas purifier 18, the dust content is less than 10 mg. Finally, the tail gas is pressurized by the exhauster 19 and discharged through the chimney 20 up to the standard.

The small amount of fine powder collected by the tail gas treatment device 17 and the tail gas purifier 18 is regularly extracted out with a tanker and sent directly to a subsequent unit for use.

The above description only reveals some preferred embodiments of the invention, with no intention to limit the protection scope of the invention as defined in the appended claims.

## Claims

1. An apparatus for granulation of a blast furnace slag and recycling of waste heat, wherein the apparatus comprises an aerosol granulation nozzle module, a flow guide (7), a cyclone separator (8) and a waste heat recovery device;
wherein the aerosol granulation nozzle module comprises a slag flow controller (2), a compressed air flow control valve (3), a water volume control valve (4) and an aerosol spray gun (5); wherein the slag flow controller (2) is coupled to a slag inlet of the flow guide (7); the compressed air flow control valve (3) is coupled to a gas inlet of the aerosol spray gun (5); the water volume control valve (4) is coupled to a liquid inlet of the aerosol spray gun (5); wherein a nozzle of the aerosol spray gun (5) is configured to face an inlet of the flow guide (7) to enable an aerosol to impinge a slag stream entering the flow guide (7) through the slag flow controller (2) to form a medium-temperature gas and a high-temperature granular slag (6) having a primarily solidified surface;
wherein the flow guide (7) is configured to fully mix the medium-temperature gas and the high-temperature granular slag (6) having a primarily solidified surface in the flow guide, wherein an outlet of the flow guide (7) is coupled to a feed port of the cyclone separator (8) to allow for entry of a completely solidified high-temperature granular slag (6) and a medium-to-high-temperature gas formed in the flow guide (7) into the cyclone separator (8);
wherein the cyclone separator (8) is configured to separate the high-temperature granular slag (6) and the medium-to-high-temperature gas; wherein a discharge port of the cyclone separator (8) is coupled to a feed port of the waste heat recovery device for delivery of the medium-to-high-temperature gas and the completely solidified high-temperature granular slag (6) to the waste heat recovery device;
wherein, the medium-temperature gas after formed by impinging the aerosol from the aerosol granulation nozzle module on the slag stream (1) has a temperature of 200-400 °C, the high-temperature granular slag (6) having a preliminarily solidified surface has a temperature of 1000-1200 °C, the medium-to-high temperature gas after mixed in the flow guide (7) has a temperature of 300-500 °C, the completely solidified high-temperature granular slag (6) has a temperature of 800-1100 °C, the high-temperature granular slag (6) after separated by the cyclone separator (8) has a temperature of 700-950 °C, and the medium-to-high temperature gas has a temperature of 350-550 °C.

2. The apparatus for granulation of a blast furnace slag and recycling of waste heat according to claim 1, wherein the waste heat recovery device is a sludge drying module comprising a screw mixer (9), a sludge dryer (10), a sludge pre-drying module, a slag-sludge recovery module and a tail gas treatment module; wherein the discharge port of the cyclone separator (8) is coupled to a first feed port of the screw mixer (9) to transport the completely solidified high-temperature granular slag (6) into the screw mixer (9); wherein an aerosol port of the cyclone separator (8) is coupled to an aerosol port of the sludge pre-drying module to transport the medium-to-high-temperature gas into the sludge pre-drying module, so that the medium-to-high-temperature gas is mixed with a wet sludge in the sludge pre-drying module to form a semi-dry sludge; wherein a discharge port of the sludge pre-drying module is coupled to a second feed port of the screw mixer (9) to transport the semi-dry sludge into the screw mixer (9), so that the semi-dry sludge and the high-temperature granular slag (6) are mixed in the screw mixer (9) to form a slag-sludge mixture; wherein a discharge port of the screw mixer (9) is coupled to a feed port of the sludge dryer (10) to transport the slag-sludge mixture into the sludge dryer (10); wherein a discharge port of the sludge dryer (10) is coupled to a feed port of the slag-sludge recovery module to transport a dry sludge powder and slag granules into the slag-sludge recovery module; wherein a gas inlet of the tail gas treatment module is coupled to a gas outlet of the sludge pre-drying module, a gas outlet of the sludge dryer (10) and a gas outlet of the slag-sludge recovery module.

3. The apparatus for granulation of a blast furnace slag and recycling of waste heat according to claim 1, wherein the waste heat recovery device is a high-temperature steam preparation module, wherein the high-temperature steam preparation module is coupled to the cyclone separator (8) to recover heat of the medium-to-high-temperature gas and the high-temperature granular slag (6) adapted to prepare a high-temperature steam having a temperature of 200-250 °C; wherein a tail gas outlet of the high-temperature steam preparation module is coupled to a tail gas treatment module.

4. The apparatus for granulation of a blast furnace slag and recycling of waste heat according to claim 3, wherein the high-temperature steam preparation module comprises a slag bin (11), a tail gas treatment device (17), a gas purifier (18), an exhauster (19), a chimney (20), a high-temperature feed conveyor (21), a high-temperature granular slag heat exchanger (22), a boiler (23) and an economizer (24);
wherein the high-temperature feed conveyor (21) is provided between the discharge port of the cyclone separator (8) and a feed port of the high-temperature granular slag heat exchanger (22) to transport the high-temperature granular slag (6) separated by the cyclone separator (8) to an upper part of the high-temperature granular slag heat exchanger (22); a coil containing circulating water is provided in the high-temperature granular slag heat exchanger (22) for reverse heat exchange of the coil and a gas stream rising from bottom to top with the high-temperature granular slag (6); the slag bin (11) is provided under a discharge port located at a bottom of the high-temperature granular slag heat exchanger (22) to receive the granular slag after cooling; a top of the high-temperature granular slag heat exchanger (22) is provided with a gas port which is coupled to the boiler (23); the economizer (24) is coupled to the boiler (23) and the high-temperature granular slag heat exchanger (22) respectively, adapted to send pure water to the economizer (24) through an external pipe network is preheated to 80 °C or higher by a tail gas emitted from the boiler (23), and divided into two parts, one part being sent into the boiler (23), and the other part entering the coil of the high-temperature granular slag heat exchanger (22) to absorb heat of the high-temperature granular slag (6); wherein a gas inlet of the tail gas treatment device (17) is coupled to a tail gas outlet of the economizer (24), a gas outlet of the tail gas treatment device (17) is coupled to a gas inlet of the tail gas purifier (18), and a gas outlet of the tail gas purifier (18) is coupled to the chimney (20) through the exhauster (19) for purification and discharge of the tail gas.

5. The apparatus for granulation of a blast furnace slag and recycling of waste heat according to claim 4, further comprising a steam drum at an upper part of the boiler (23), adapted to mix water vaporized in the coil and with a temperature raised to about 250 °C with steam generated by the boiler (23) itself and incorporate the mixed steam into the external pipe network.

6. The apparatus for granulation of a blast furnace slag and recycling of waste heat according to claim 1, wherein the waste heat recovery device is a low-temperature hot water preparation module, wherein the low-temperature hot water preparation module is coupled to the cyclone separator (8) to recover heat of the medium-to-high-temperature gas and the high-temperature granular slag (6) adapted to prepare low-temperature hot water having a temperature of 70-95 °C; wherein a tail gas outlet of the low-temperature hot water preparation module is coupled to a tail gas treatment module.

7. The apparatus for granulation of a blast furnace slag and recycling of waste heat according to claim 5, wherein the low-temperature hot water preparation module comprises a slag bin (11), a tail gas treatment device (17), a gas purifier (18), an exhauster (19), a chimney (20), a high-temperature feed conveyor (21), a high-temperature granular slag heat exchanger (22) and a boiler (23);
wherein the high-temperature feed conveyor (21) is provided between the discharge port of the cyclone separator (8) and a feed port of the high-temperature granular slag heat exchanger (22) to transport the high-temperature granular slag (6) separated by the cyclone separator (8) to an upper part of the high-temperature granular slag heat exchanger (22); a coil containing circulating water is provided in the high-temperature granular slag heat exchanger (22) for reverse heat exchange of the high-temperature granular slag (6) with the coil and a gas stream rising from bottom to top; the slag bin (11) is provided under a discharge port located at a bottom of the high-temperature granular slag heat exchanger (22) to receive the granular slag after cooling; a top of the high-temperature granular slag heat exchanger (22) is provided with a gas port which is coupled to the boiler (23); the boiler (23) and the high-temperature granular slag heat exchanger (22) are coupled to an external pipe network respectively to receive pure water for heat exchange in the boiler (23) and the high-temperature granular slag heat exchanger (22); wherein a gas inlet of the tail gas treatment device (17) is coupled to a tail gas outlet of the boiler (23), a gas outlet of the tail gas treatment device (17) is coupled to a gas inlet of the tail gas purifier (18), and a gas outlet of the tail gas purifier (18) is coupled to the chimney (20) through the exhauster (19) for purification and discharge of the tail gas.

8. The apparatus for granulation of a blast furnace slag and recycling of waste heat according to claim 2, wherein the tail gas treatment module comprises a tail gas treatment device (17), a tail gas purifier (18), an exhauster (19) and a chimney (20), wherein a gas inlet of the tail gas treatment device (17) is coupled to the gas outlet of the sludge pre-drying module, the gas outlet of the sludge dryer (10), and the gas outlet of the slag-sludge recovery module through pipes respectively, wherein a gas outlet of the tail gas treatment device (17) is coupled to a gas inlet of the tail gas purifier (18), wherein a gas outlet of the tail gas purifier (18) is coupled to the chimney (20) through the exhauster (19).

9. A method for granulation and waste heat recycling using the apparatus for granulation of a blast furnace slag and recycling of waste heat according to claim 1, wherein the method comprises the following steps:
Step 1: allowing a blast furnace slag separated from molten iron to enter a slag runner where a slag stream (1) is formed and flows into a flow guide (7) after its flow is controlled by a slag flow controller (2);
Step 2: adjusting a compressed air flow control valve (3) and a water volume control valve (4) to form a high-pressure aerosol in an aerosol spray gun (5) and spray the high-pressure aerosol out through a nozzle, so that the high-pressure aerosol impinges the slag stream (1) flowing into the flow guide (7) to form a medium-temperature gas and a high-temperature granular slag (6) having a preliminarily solidified surface;
Step 3: mixing and heat exchanging the medium-temperature gas and the high-temperature granular slag (6) having a preliminarily solidified surface through the flow guide (7) to form a completely solidified high-temperature granular slag (6) and a medium-to-high-temperature gas which are transported to a cyclone separator (8) by which the high-temperature granular slag (6) and the medium-to-high-temperature gas are separated;
Step 4: transporting the medium-to-high-temperature gas and the high-temperature granular slag (6) to a waste heat recovery device from the cyclone separator (8), wherein heat of the medium-to-high-temperature gas and the high-temperature granular slag (6) is recovered by the waste heat recovery device and used for sludge drying,
high-temperature steam preparation, power generation or low-temperature hot water preparation;
wherein after formed by impinging the aerosol from the aerosol granulation nozzle module on the slag stream (1), the medium-temperature gas has a temperature of 200-400 °C, and the high-temperature granular slag (6) having a preliminarily solidified surface has a temperature of 1000-1200 °C; wherein after mixed in the flow guide (7), the medium-to-high temperature gas has a temperature of 300-500 °C, and the completely solidified high-temperature granular slag (6) has a temperature of 800-1100 °C; wherein after separated by the cyclone separator (8), the high-temperature granular slag (6) has a temperature of 700-950 °C, and the medium-to-high temperature gas has a temperature of 350-550 °C.

10. The method for granulation and waste heat recycling using the apparatus for granulation of a blast furnace slag and recycling of waste heat according to claim 9, wherein the step of sludge drying comprises:
Step 4.1.1: pumping a wet sludge from a sludge tank (16) with a sludge pump (15) into a sludge pre-drier (14);
Step 4.1.2: mixing and reversely heat exchanging the wet sludge with the medium-to-high-temperature gas in the sludge pre-dryer (14) to form a semi-dry sludge;
Step 4.1.3: transporting the semi-dry sludge from the sludge pre-drying module to a screw mixer (9), and transporting the high-temperature granular slag (6) from the cyclone separator (8) to the screw mixer (9), wherein the semi-dry sludge and the high-temperature granular slag (6) are mixed by the screw mixer (9) to form a slag-sludge mixture;
Step 4.1.4: transporting the slag-sludge mixture from the screw mixer (9) to a sludge dryer (10), wherein the sludge dryer (10) dries the slag-sludge mixture into a dry sludge powder and slag granules which are transported to a slag-sludge recovery module;
Step 4.1.5: separating the dry sludge powder from the slag granules in a slag-sludge separator (13) of the slag-sludge recovery module;
Step 4.1.6: transporting the dry sludge powder from the sludge separator (13) to a dry sludge powder bin (12) for temporary storage;
Step 4.1.7: transporting the slag granules from the sludge separator (13) to a slag bin (11) for temporary storage;
wherein the method further comprises purifying and discharging a wet tail gas with a tail gas treatment module, including: collecting and pretreating the wet tail gas from the sludge pre-dryer (14), the sludge dryer (10) and the slag-sludge separator (13) with a tail gas treatment device (17) of the tail gas treatment module, followed by deep purification with a tail gas purifier (18), wherein the tail gas purified up to standard is discharged through a chimney (20) by an exhauster (19); and the fine powder collected in the tail gas treatment device (17) and the tail gas purifier (18) is extracted out with an external tanker.

11. The method for granulation and waste heat recycling using the apparatus for granulation of a blast furnace slag and recycling of waste heat according to claim 9, wherein the step of high-temperature steam preparation comprises:
Step 4.2.1: transporting the high-temperature granular slag (6) from the cyclone separator (8) to a high-temperature granular slag conveyor (21) which lifts the high-temperature granular slag (6) and feeds it to a high-temperature granular slag heat exchanger (22) from an upper inlet of the high-temperature granular slag heat exchanger (22), wherein the high-temperature granular slag (6) moves from top to bottom, and in the process of descending, it contacts and exchanges heat countercurrently with cooling water in a coil and air rising from bottom to top;
Step 4.2.2: discharging the heated steam from a top of the high-temperature granular slag heat exchanger (22) and sending it to a boiler (23), and discharging the cooled granular slag from a lower part of the high-temperature granular slag heat exchanger to a slag bin (11);
Step 4.2.3: sending pure water supplied from an external pipe network to an economizer (24) to be preheated to 80 °C or higher by a tail gas discharged from the boiler (23), wherein one part of the pure water is sent to the boiler (23) to be further heated and vaporized into steam having a temperature of 200-250 °C, and the other part enters the coil of the high-temperature granular slag heat exchanger (22) to absorb heat of the high-temperature granular slag (6);
Step 4.2.4: sending the water in the coil to a steam drum at an upper of the boiler (23) after it is vaporized and heated to about 250 °C, wherein it is mixed with steam generated in the boiler (23) itself and then integrated into the external pipe network.

12. The method for granulation and waste heat recycling using the apparatus for granulation of a blast furnace slag and recycling of waste heat according to claim 9, wherein the step of low-temperature hot water preparation comprises:
Step 4.3.1: transporting the high-temperature granular slag (6) from the cyclone separator (8) to a high-temperature granular slag conveyor (21) which lifts the high-temperature granular slag (6) and feeds it to a high-temperature granular slag heat exchanger (22) from an upper inlet of the high-temperature granular slag heat exchanger (22), wherein the high-temperature granular slag (6) moves from top to bottom, and in the process of descending, it contacts and exchanges heat countercurrently with cooling water in a coil and air rising from bottom to top;
Step 4.3.2: discharging the heated low-temperature hot water having a temperature of 70-95 °C from a top of the high-temperature granular slag heat exchanger (22) and sending it to a boiler (23), and discharging the cooled granular slag from a lower part of the high-temperature granular slag heat exchanger to a slag bin (11);
Step 4.3.3: sending one part of pure water from an external pipe network to the boiler (23) to be heated to 70-95 °C by a gas passing through the boiler (23), and sending the other part to the coil of the high-temperature granular slag heat exchanger (22) to absorb heat of the high-temperature granular slag (6);
Step 4.3.4: sending the water in the coil to a steam drum at an upper part of the boiler (23) after it is heated by absorbing the heat, wherein it is mixed with hot water generated in the boiler (23) itself and then integrated into the external pipe network.

## Patentansprüche

1. Vorrichtung zum Granulieren von Hochofenschlacke und zum Rückgewinnen von Abwärme, wobei die Vorrichtung ein Aerosolgranulierungsdüsenmodul, eine Strömungsführung (7), einen Zyklonabscheider (8) und eine Abwärmerückgewinnungsvorrichtung umfasst;
wobei das Aerosolgranulierdüsenmodul einen Schlackedurchflussregler (2), ein Druckluftströmungsregelventil (3), ein Wasservolumenregelventil (4) und eine Aerosol-Sprühpistole (5) umfasst; wobei der Schlackedurchflussregler (2) mit einem Schlackeinlass der Strömungsführung (7) verbunden ist; das Druckluftströmungsregelventil (3) mit einem Gaseinlass der Aerosol-Sprühpistole (5) verbunden ist; das Wasservolumenregelventil (4) mit einem Flüssigkeitseinlass der Aerosol-Sprühpistole (5) verbunden ist; wobei eine Düse der Aerosol-Sprühpistole (5) so konfiguriert ist, dass sie einem Einlass der Strömungsführung (7) zugewandt ist, damit ein Aerosol auf einen Schlackestrom auftreffen kann, der durch den Schlackendurchflussregler (2) in die Strömungsführung (7) eintritt, um ein Gas mittlerer Temperatur und eine Hochtemperatur-Granulatschlacke (6) mit einer primär verfestigten Oberfläche zu bilden;
wobei die Strömungsführung (7) so konfiguriert ist, dass sie das mitteltemperierte Gas und die Hochtemperatur-Granulatschlacke (6) mit einer vorwiegend verfestigten Oberfläche in der Strömungsführung vollständig vermischt, wobei ein Auslass der Strömungsführung (7) mit einer Zufuhröffnung des Zyklonabscheiders (8) verbunden ist, um den Eintritt einer vollständig verfestigten Hochtemperatur-Granulatschlacke (6) und eines in der Strömungsführung (7) gebildeten mittel- bis hochtemperaturigen Gases in den Zyklonabscheider (8) zu ermöglichen;
wobei der Zyklonabscheider (8) so konfiguriert ist, dass er die Hochtemperatur-Granulatschlacke (6) und das Gas mit mittlerer bis hoher Temperatur trennt; wobei eine Auslassöffnung des Zyklonabscheiders (8) mit einer Zufuhröffnung der Abwärmerückgewinnungsvorrichtung verbunden ist, um das Gas mit mittlerer bis hoher Temperatur und die vollständig erstarrte Hochtemperatur-Granulatschlacke (6) zur Abwärmerückgewinnungsvorrichtung zuzuführen;
wobei das mitteltemperierte Gas, nachdem es durch Auftreffen des Aerosols aus dem Aerosolgranulierungsdüsenmodul auf den Schlackenstrom (1) gebildet wurde, eine Temperatur von 200-400 °C aufweist, die Hochtemperatur-Granulatschlacke (6) mit einer vorläufig verfestigten Oberfläche eine Temperatur von 1000 bis 1200 °C aufweist, das mittel- bis hochtemperierte Gas nach dem Mischen in der Strömungsführung (7) eine Temperatur von 300 bis 500 °C aufweist, die vollständig erstarrte Hochtemperatur-Granulatschlacke (6) eine Temperatur von 800 bis 1100 °C aufweist, die Hochtemperatur-Granulatschlacke (6) nach der Abscheidung durch den Zyklonabscheider (8) eine Temperatur von 700 bis 950 °C aufweist und das Gas mittlerer bis hoher Temperatur eine Temperatur von 350 bis 550 °C aufweist.

2. Die Vorrichtung zum Granulieren von Hochofenschlacke und zum Rückgewinnen von Abwärme gemäß Anspruch 1, wobei die Abwärmerückgewinnungsvorrichtung ein Schlammtrocknungsmodul ist, das einen Schneckenmischer (9), einen Schlammtrockner (10), ein Schlamm-Vortrocknungsmodul, ein Schlacke-Schlamm-Rückgewinnungsmodul und ein Abgasbehandlungsmodul umfasst; wobei die Auslassöffnung des Zyklonabscheiders (8) mit einer ersten Zuführöffnung des Schneckenmischers (9) verbunden ist, um die vollständig verfestigte Hochtemperatur-Granulatschlacke (6) in den Schneckenmischer (9) zu transportieren;
wobei eine Aerosolöffnung des Zyklonabscheiders (8) mit einer Aerosolöffnung des Schlamm-Vortrocknungsmoduls verbunden ist, um das Mittel- bis Hochtemperaturgas in das Schlamm-Vortrocknungsmodul zu transportieren, sodass das mittel- bis hochtemperierte Gas mit einem feuchten Schlamm im Schlamm-Vortrocknungsmodul gemischt wird, um einen halbtrockenen Schlamm zu bilden; wobei eine Auslassöffnung des Schlamm-Vortrocknungsmoduls mit einer zweiten Zufuhröffnung des Schneckenmischers (9) verbunden ist, um den halbtrockenen Schlamm in den Schneckenmischer (9) zu transportieren, so dass der halbtrockene Schlamm und die Hochtemperatur-Granulatschlacke (6) im Schneckenmischer (9) gemischt werden, um eine Schlacke-Schlamm-Mischung zu bilden; wobei eine Auslassöffnung des Schneckenmischers (9) mit einer Zufuhröffnung des Schlammtrockners (10) verbunden ist, um die Schlacke-Schlamm-Mischung in den Schlammtrockner (10) zu transportieren; wobei eine Auslassöffnung des Schlammtrockners (10) mit einer Zufuhröffnung des Schlacke-Schlamm-Rückgewinnungsmoduls verbunden ist, um ein trockenes Schlammpulver und Schlackegranulat in das Schlacke-Schlamm-Rückgewinnungsmodul zu transportieren; wobei ein Gaseinlass des Abgasbehandlungsmoduls mit einem Gasauslass des Schlamm-Vortrocknungsmoduls, einem Gasauslass des Schlammtrockners (10) und einem Gasauslass des Schlacke-Schlamm-Rückgewinnungsmoduls verbunden ist.

3. Die Vorrichtung zum Granulieren von Hochofenschlacke und zum Rückgewinnen von Abwärme gemäß Anspruch 1, wobei die Abwärmerückgewinnungsvorrichtung ein Hochtemperatur-Dampferzeugungsmodul ist, wobei das Hochtemperatur-Dampferzeugungsmodul mit dem Zyklonabscheider (8) gekoppelt ist, um Wärme aus dem mittel- bis hochtemperierten Gas und der Hochtemperatur-Granulatschlacke (6) zurückzugewinnen zur Erzeugung von Hochtemperaturdampf mit einer Temperatur von 200 bis 250 °C ausgelegt ist; wobei ein Abgasauslass des Hochtemperaturdampferzeugungsmoduls mit einem Abgasbehandlungsmodul gekoppelt ist.

4. Die Vorrichtung zum Granulieren von Hochofenschlacke und zum Rückgewinnen von Abwärme gemäß Anspruch 3, wobei das Hochtemperatur-Dampferzeugungsmodul einen Schlackebehälter (11), eine Abgasbehandlungsvorrichtung (17), einen Gasreiniger (18), einen Absauger (19), einen Schornstein (20), einen Hochtemperatur-Förderer (21), einen Hochtemperatur-Granulatschlacke-Wärmetauscher (22), einen Kessel (23) und einen Vorwärmer (24) umfasst;
wobei der Hochtemperatur-Förderer (21) zwischen der Auslassöffnung des Zyklonabscheiders (8) und einer Zuführöffnung des Hochtemperatur-Granulatschlacke-Wärmetauschers (22) vorgesehen ist, um die durch den Zyklonabscheider (8) abgeschiedene Hochtemperatur-Granulatschlacke (6) zu einem oberen Teil des Hochtemperatur-Granulatschlacke-Wärmetauschers (22) zu transportieren; in dem Hochtemperatur-Granulatschlacke-Wärmetauscher (22) ist eine Spule mit zirkulierendem Wasser vorgesehen, um einen umgekehrten Wärmeaustausch zwischen der Spule und einem von unten nach oben aufsteigenden Gasstrom mit der Hochtemperatur-Granulatschlacke (6) zu ermöglichen; der Schlackebehälter (11) ist unter einer Auslassöffnung vorgesehen, die sich an einer Unterseite des Hochtemperatur-Granulatschlacke-Wärmetauschers (22) befindet, um die Granulatschlacke nach dem Abkühlen aufzunehmen; eine Oberseite des Hochtemperatur-Granulatschlacke-Wärmetauschers (22) ist mit einer Gasöffnung versehen, die mit dem Kessel (23) verbunden ist; der Vorwärmer (24) ist mit dem Kessel (23) bzw. dem Hochtemperatur-Granulatschlacke-Wärmetauscher (22) verbunden und so ausgelegt, dass er reines Wasser über ein externes Rohrleitungsnetz zum Vorwärmer (24) leitet, das durch ein aus dem Kessel (23) austretendes Abgas auf 80 °C oder mehr vorgewärmt wird, und in zwei Teile aufgeteilt wird, wobei ein Teil in den Kessel (23) geleitet wird und der andere Teil in die Spule des Hochtemperatur-Granulatschlacke-Wärmetauschers (22) gelangt, um die Wärme der Hochtemperatur-Granulatschlacke (6) zu absorbieren; wobei ein Gaseinlass der Abgasbehandlungsvorrichtung (17) mit einem Abgasauslass des Vorwärmers (24) verbunden ist, ein Gasauslass der Abgasbehandlungsvorrichtung (17) mit einem Gaseinlass des Abgasreinigers (18) verbunden ist und ein Gasauslass des Abgasreinigers (18) über den Absauger (19) mit dem Schornstein (20) verbunden ist, um das Abgas zu reinigen und abzuleiten.

5. Die Vorrichtung zum Granulieren von Hochofenschlacke und zum Rückgewinnen von Abwärme gemäß Anspruch 4, welche ferner eine Dampftrommel an einem oberen Teil des Kessels (23) umfasst, die dazu ausgelegt ist, in der Spule verdampftes Wasser mit einer auf etwa 250 °C erhöhten Temperatur mit dem vom Kessel (23) selbst erzeugten Dampf zu mischen und den gemischten Dampf in das externe Rohrnetzwerk einzuleiten.

6. Die Vorrichtung zum Granulieren von Hochofenschlacke und zum Rückgewinnen von Abwärme gemäß Anspruch 1, wobei die Abwärmerückgewinnungsvorrichtung ein Niedertemperatur-Warmwasseraufbereitungsmodul ist, wobei das Niedertemperatur-Warmwasseraufbereitungsmodul mit dem Zyklonabscheider (8) gekoppelt ist, um Wärme aus dem mittel- bis hochtemperierten Gas und der Hochtemperatur-Granulatschlacke (6) zurückzugewinnen geeignet ist, Niedertemperatur-Heißwasser mit einer Temperatur von 70-95 °C aufzubereiten; wobei ein Abgasauslass des Niedertemperatur-Heißwasseraufbereitungsmoduls mit einem Abgasbehandlungsmodul gekoppelt ist.

7. Die Vorrichtung zum Granulieren von Hochofenschlacke und zum Rückgewinnen von Abwärme gemäß Anspruch 5, wobei das Niedertemperatur-Heißwasseraufbereitungsmodul einen Schlackebehälter (11), eine Abgasbehandlungsvorrichtung (17), einen Gasreiniger (18), einen Absauger (19), einen Schornstein (20), einen Hochtemperatur-Förderer (21), einen Hochtemperatur-Granulatschlacke-Wärmetauscher (22) und einen Kessel (23) umfasst; wobei der Hochtemperatur-Förderer (21) zwischen der Auslassöffnung des Zyklonabscheiders (8) und einer Zuführöffnung des Hochtemperatur-Granulatschlacke-Wärmetauschers (22) vorgesehen ist, um die durch den Zyklonabscheider (8) abgeschiedene Hochtemperatur-Granulatschlacke (6) zu einem oberen Teil des Hochtemperatur-Granulatschlacke-Wärmetauschers (22) zu transportieren; in dem Hochtemperatur-Granulatschlacke-Wärmetauscher (22) ist eine Spule mit zirkulierendem Wasser vorgesehen, um einen umgekehrten Wärmeaustausch der Hochtemperatur-Granulatschlacke (6) mit der Spule und einem von unten nach oben aufsteigenden Gasstrom zu ermöglichen; der Schlackebehälter (11) ist unter einer Auslassöffnung am Boden des Hochtemperatur-Granulatschlacke-Wärmetauschers (22) vorgesehen, um die Granulatschlacke nach dem Abkühlen aufzunehmen; eine Oberseite des Hochtemperatur-Granulatschlacke-Wärmetauschers (22) ist mit einer Gasöffnung versehen, die mit dem Kessel (23) verbunden ist; der Kessel (23) und der Hochtemperatur-Granulatschlacke-Wärmetauscher (22) sind jeweils mit einem externen Rohrleitungsnetz verbunden, um reines Wasser für den Wärmeaustausch im Kessel (23) und im Hochtemperatur-Granulatschlacke-Wärmetauscher (22) aufzunehmen; wobei ein Gaseinlass der Abgasbehandlungsvorrichtung (17) mit einem Abgasauslass des Kessels (23) verbunden ist, ein Gasauslass der Abgasbehandlungsvorrichtung (17) mit einem Gaseinlass des Abgasreinigers (18) verbunden ist und ein Gasauslass des Abgasreinigers (18) über den Absauger (19) mit dem Schornstein (20) verbunden ist, um das Abgas zu reinigen und abzuleiten.

8. Die Vorrichtung zum Granulieren von Hochofenschlacke und zum Rückgewinnen von Abwärme gemäß Anspruch 2, wobei das Abgasbehandlungsmodul eine Abgasbehandlungsvorrichtung (17), einen Abgasreiniger (18), einen Absauger (19) und einen Schornstein (20) umfasst, wobei ein Gaseinlass der Abgasbehandlungsvorrichtung (17) mit dem Gasauslass des Schlamm-Vortrocknungsmoduls, dem Gasauslass des Schlammtrockners (10) und dem Gasauslass des Schlacke-Schlamm-Rückgewinnungsmoduls jeweils über Rohrleitungen verbunden ist, wobei ein Gasauslass der Abgasbehandlungsvorrichtung (17) mit einem Gaseinlass des Abgasreinigers (18) verbunden ist, wobei ein Gasauslass des Abgasreinigers (18) über den Absauger (19) mit dem Schornstein (20) verbunden ist.

9. Verfahren zum Granulieren und zum Rückgewinnen von Abwärme unter Verwendung der Vorrichtung zum Granulieren von Hochofenschlacke und Rückgewinnen von Abwärme gemäß Anspruch 1, wobei das Verfahren die folgenden Schritte umfasst:
Schritt 1: Einleiten der von geschmolzenem Eisen getrennten Hochofenschlacke in einen Schlackeauslauf, wo ein Schlackestrom (1) gebildet wird, der nach Steuerung seines Flusses durch einen Schlackedurchflussregler (2) in eine Strömungsführung (7) fließt;
Schritt 2: Einstellen eines Druckluftströmungsregelventils (3) und eines Wasservolumenregelventils (4), um in einer Aerosol-Sprühpistole (5) ein Hochdruckaerosol zu bilden und das Hochdruckaerosol durch eine Düse auszusprühen, so dass das Hochdruckaerosol auf den in die Strömungsführung (7) fließenden Schlackenstrom (1) trifft, um ein mitteltemperiertes Gas und eine Hochtemperatur-Granulatschlacke (6) mit einer vorläufig erstarrten Oberfläche zu bilden;
Schritt 3: Mischen und Wärmeaustauschen des mitteltemperierten Gases und der Hochtemperatur-Granulatschlacke (6) mit einer vorläufig erstarrten Oberfläche durch die Strömungsführung (7) zu mischen und zu erwärmen, um eine vollständig erstarrte Hochtemperatur-Granulatschlacke (6) und ein mittel- bis hochtemperiertes Gas zu bilden, die zu einem Zyklonabscheider (8) transportiert werden, durch den die Hochtemperatur-Granulatschlacke (6) und das mittel- bis hochtemperierte Gas getrennt werden;
Schritt 4: Transportieren des mittel- bis hochtemperierten Gases und der Hochtemperatur-Granulatschlacke (6) zu einer Abwärmerückgewinnungsvorrichtung aus dem Zyklonabscheider (8), wobei die Wärme des mittel- bis hochtemperierten Gases und der Hochtemperatur-Granulatschlacke (6) durch die Abwärmerückgewinnungsvorrichtung zurückgewonnen und für die Schlammtrocknung, die Erzeugung von Hochtemperaturdampf, die Stromerzeugung oder die Erzeugung von Niedertemperatur-Heißwasser verwendet wird;
wobei nach der Bildung durch Auftreffen des Aerosols aus dem Aerosolgranulierungsdüsenmodul auf den Schlackestrom (1) das mitteltemperierte Gas eine Temperatur von 200 bis 400 °C aufweist und die
Hochtemperatur-Granulatschlacke (6) mit einer vorläufig erstarrten Oberfläche eine Temperatur von 1000 bis 1200 °C aufweist; wobei nach dem Mischen in der Strömungsführung (7) das mittel- bis hochtemperierte Gas eine Temperatur von 300 bis 500 °C aufweist und die vollständig erstarrte Hochtemperatur-Granulatschlacke (6) eine Temperatur von 800 bis 1100 °C aufweist; wobei nach der Trennung durch den Zyklonabscheider (8) die Hochtemperatur-Granulatschlacke (6) eine Temperatur von 700 bis 950 °C und das mittel- bis hochtemperierte Gas eine Temperatur von 350 bis 550 °C aufweist.

10. Das Verfahren zum Granulieren und zum Rückgewinnen von Abwärme unter Verwendung der Vorrichtung zum Granulieren von Hochofenschlacke und Rückgewinnen von Abwärme gemäß Anspruch 9, wobei der Schritt des Schlammtrocknens umfasst:
Schritt 4.1.1: Pumpen eines feuchten Schlamms aus einem Schlammtank (16) mit einer Schlammpumpe (15) in einen Schlamm-Vortrockner (14);
Schritt 4.1.2: Mischen und umgekehrter Wärmeaustausch des feuchten Schlamms mit dem mittel- bis hochtemperaturigen Gas im Schlamm-Vortrockner (14), um einen halbtrockenen Schlamm zu bilden;
Schritt 4.1.3: Transportieren des halbtrockenen Schlamms aus dem Schlamm-Vortrocknungsmodul zu einem Schneckenmischer (9) und Transportieren der Hochtemperatur-Granulatschlacke (6) aus dem Zyklonabscheider (8) zum Schneckenmischer (9), wobei der halbtrockene Schlamm und die Hochtemperatur-Granulatschlacke (6) durch den Schneckenmischer (9) gemischt werden, um eine Schlacke-Schlamm-Mischung zu bilden;
Schritt 4.1.4: Transportieren der Schlacke-Schlamm-Mischung vom Schneckenmischer (9) zu einem Schlammtrockner (10), wobei der Schlammtrockner (10) die Schlacke-Schlamm-Mischung zu einem trockenen Schlammpulver und zu Schlackegranulat trocknet, die zu einem Schlacke-Schlamm-Rückgewinnungsmodul transportiert werden;
Schritt 4.1.5: Trennen des trockenen Schlammpulvers von den Schlackegranulaten in einem Schlacke-Schlamm-Separator (13) des Schlacke-Schlamm-Rückgewinnungsmoduls;
Schritt 4.1.6: Transportieren des trockenen Schlammpulvers aus dem Schlammseparator (13) zu einem Trockenschlammpulverbehälter (12) zur Zwischenlagerung;
Schritt 4.1.7: Transportieren des Schlackengranulats aus dem Schlammseparator (13) zu einem Schlackebehälter (11) zur Zwischenlagerung;
wobei das Verfahren ferner das Reinigen und Ableiten eines feuchten Abgases mit einem Abgasbehandlungsmodul umfasst, einschließlich: Sammeln und Vorbehandeln des feuchten Abgases aus dem Schlamm-Vortrockner (14), dem Schlammtrockner (10) und dem Schlacke-Schlamm-Separator (13) mit einer Abgasbehandlungsvorrichtung (17) des Abgasbehandlungsmoduls, gefolgt von einer Tiefenreinigung mit einem Abgasreiniger (18), wobei das auf den Standard gereinigte Abgas durch einen Abzug (19) über einen Schornstein (20) abgeführt wird; und das in der Abgasbehandlungsvorrichtung (17) und dem Abgasreiniger (18) gesammelte Feinpulver mit einem externen Tankwagen abtransportiert wird.

11. Das Verfahren zum Granulieren und zum Rückgewinnen von Abwärme unter Verwendung der Vorrichtung zum Granulieren von Hochofenschlacke und Rückgewinnen von Abwärme gemäß Anspruch 9, wobei der Schritt der Hochtemperaturdampferzeugung umfasst:
Schritt 4.2.1: Transportieren der Hochtemperatur-Granulatschlacke (6) vom Zyklonabscheider (8) zu einem Hochtemperatur-Granulatschlacke-Förderer (21), der die Hochtemperatur-Granulatschlacke (6) anhebt und sie einem Hochtemperatur-Granulatschlacke-Wärmetauscher (22) von einem oberen Einlass des Hochtemperatur-Granulatschlacke-Wärmetauschers (22) fördert, wobei sich die Hochtemperatur-Granulatschlacke (6) von oben nach unten bewegt und während des Abwärtsbewegens mit Kühlwasser in einer Spule und von unten nach oben aufsteigender Luft in Gegenstromkontakt kommt und Wärme austauscht;
Schritt 4.2.2: Ableiten des erhitzten Dampfes aus einem oberen Teil des Hochtemperatur-Granulatschlacke-Wärmetauschers (22) und Leiten desselben zu einem Kessel (23) sowie Ableiten der gekühlten Granulatschlacke aus einem unteren Teil des Hochtemperatur-Granulatschlacke-Wärmetauschers zu einem Schlackebehälter (11);
Schritt 4.2.3: Weiterleiten von reinem Wasser, das aus einem externen Rohrleitungsnetz zugeführt wird, zu einem Vorwärmer (24), um dort durch Abgas, das aus dem Kessel (23) abgegeben wird, auf 80 °C oder mehr vorgewärmt zu werden (23) vorgewärmt wird, wobei ein Teil des reinen Wassers zum Kessel (23) geleitet wird, um weiter erhitzt und zu Dampf mit einer Temperatur von 200 bis 250 °C verdampft zu werden, und der andere Teil in die Spule des Hochtemperatur-Granulatschlacke-Wärmetauschers (22) gelangt, um die Wärme der Hochtemperatur-Granulatschlacke (6) zu absorbieren;
Schritt 4.2.4: Leiten des Wassers in der Spule nach dem Verdampfen und Erhitzen auf etwa 250 °C zu einem Dampftrommel im oberen Teil des Kessels (23), wo es mit dem im Kessel (23) selbst erzeugten Dampf gemischt und dann in das externe Rohrleitungsnetz integriert wird.

12. Das Verfahren zum Granulieren und zum Rückgewinnen von Abwärme unter Verwendung der Vorrichtung zum Granulieren von Hochofenschlacke und Rückgewinnen von Abwärme gemäß Anspruch 9, wobei der Schritt der Niedertemperatur-Heißwasseraufbereitung umfasst:
Schritt 4.3.1: Transportieren der Hochtemperatur-Granulatschlacke (6) vom Zyklonabscheider (8) zu einem Hochtemperatur-Granulatschlacke-Förderer (21), der die Hochtemperatur-Granulatschlacke (6) anhebt und sie einem Hochtemperatur-Granulatschlacke-Wärmetauscher (22) von einem oberen Einlass des Hochtemperatur-Granulatschlacke-Wärmetauschers (22) fördert, wobei sich die Hochtemperatur-Granulatschlacke (6) von oben nach unten bewegt und während des Abwärtsbewegens mit Kühlwasser in einer Spule und von unten nach oben aufsteigender Luft in Gegenstromkontakt kommt und Wärme austauscht;
Schritt 4.3.2: Ablassen des erwärmten Niedertemperatur-Heißwassers mit einer Temperatur von 70-95 °C aus einem oberen Teil des Hochtemperatur-Granulatschlacke-Wärmetauschers (22) und Leiten desselben zu einem Kessel (23) sowie Ablassen der gekühlten Granulatschlacke aus einem unteren Teil des Hochtemperatur-Granulatschlacke-Wärmetauschers in einen Schlackebehälter (11) ;
Schritt 4.3.3: Leiten eines Teils des reinen Wassers aus einem externen Rohrleitungsnetz zum Kessel (23), um es durch ein durch den Kessel (23) strömendes Gas auf 70 bis 95 °C zu erhitzen, und Leiten des anderen Teils zur Spule des Hochtemperatur-Granulatschlacke-Wärmetauschers (22), um die Wärme der Hochtemperatur-Granulatschlacke (6) zu absorbieren;
Schritt 4.3.4: Leiten des Wassers in der Spule zu einem Dampftrommel im oberen Teil des Kessels (23), nachdem es durch Absorption der Wärme erhitzt wurde, wo es mit heißem Wasser gemischt wird, das im Kessel (23) selbst erzeugt wurde, und dann in das externe Rohrleitungsnetz integriert wird.

## Revendications

1. Un appareil pour la granulation d'un laitier de haut fourneau et le recyclage de la chaleur perdue, dans lequel l'appareil comprend un module de buse de granulation par aérosol, un guide d'écoulement (7), un séparateur cyclone (8) et un dispositif de récupération de chaleur perdue ;
dans lequel le module de buse de granulation d'aérosol comprend un régulateur de débit de laitier (2), une vanne de régulation de débit d'air comprimé (3), une vanne de régulation de débit d'eau (4) et un pistolet de pulvérisation d'aérosol (5) ; dans lequel le régulateur de débit de laitier (2) est couplé à une entrée de laitier du guide d'écoulement (7) ; la vanne de régulation du débit d'air comprimé (3) est couplée à une entrée de gaz du pistolet de pulvérisation d'aérosol (5) ; la vanne de régulation du débit d'eau (4) est couplée à une entrée de liquide du pistolet de pulvérisation d'aérosol (5) ; dans lequel une buse du pistolet de pulvérisation d'aérosol (5) est configurée pour faire face à une entrée du guide d'écoulement (7) afin de permettre à un aérosol d'entrer en collision avec un flux de scories entrant dans le guide d'écoulement (7) à travers le régulateur de débit de laitier (2) pour former un gaz à température moyenne et du laitier granulaire à haute température (6) ayant une surface principalement solidifiée ;
dans lequel le guide d'écoulement (7) est configuré pour mélanger complètement le gaz à température moyenne et le laitier granulaire à haute température (6) ayant une surface principalement solidifiée dans le guide d'écoulement, dans lequel une sortie du guide d'écoulement (7) est couplée à un orifice d'alimentation du séparateur cyclone (8) pour permettre l'entrée d'un laitier granulaire à haute température complètement solidifié (6) et d'un gaz à température moyenne à élevée formé dans le guide d'écoulement (7) dans le séparateur cyclone (8) ;
dans lequel le séparateur cyclone (8) est configuré pour séparer le laitier granulaire à haute température (6) et le gaz à température moyenne à élevée ; dans lequel un orifice de décharge du séparateur cyclone (8) est couplé à un orifice d'alimentation du dispositif de récupération de chaleur résiduelle pour acheminer le gaz à température moyenne à élevée et le laitier granulaire à haute température complètement solidifiées (6) vers le dispositif de récupération de chaleur résiduelle ;
dans lequel le gaz à température moyenne formé après avoir heurté le flux de scories (1) à partir du module de buses de granulation d'aérosol a une température de 200 à 400 °C, le laitier granulaire à haute température (6) ayant une surface préalablement solidifiée a une température de 1000 à 1200 °C, le gaz à température moyenne à élevée après mélange dans le guide d'écoulement (7) a une température de 300 à 500 °C, le laitier granulaire à haute température complètement solidifiées (6) ont une température de 800 à 1100 °C, le laitier granulaire à haute température (6) après séparation par le séparateur cyclonique (8) ont une température de 700 à 950 °C, et le gaz à température moyenne à élevée a une température de 350 à 550 °C.

2. L'appareil pour la granulation d'un laitier de haut fourneau et le recyclage de la chaleur perdue selon la revendication 1, dans lequel le dispositif de récupération de la chaleur perdue est un module de séchage des boues comprenant un mélangeur à vis (9), un séchoir à boues (10), un module de préséchage des boues, un module de récupération des boues de laitier et un module de traitement des gaz résiduaires; dans lequel l'orifice de décharge du séparateur cyclone (8) est couplé à un premier orifice d'alimentation du mélangeur à vis (9) pour transporter le laitier granulaire à haute température complètement solidifié (6) dans le mélangeur à vis (9) ; dans lequel un orifice d'aérosol du séparateur cyclonique (8) est couplé à un orifice d'aérosol du module de pré-séchage des boues pour transporter le gaz à température moyenne à élevée dans le module de pré-séchage des boues, de sorte que le gaz à température moyenne à élevée soit élangé à des boues humides dans le module de pré-séchage des boues pour former des boues semi-sèches ; dans lequel un orifice de décharge du module de pré-séchage des boues est couplé à un deuxième orifice d'alimentation du mélangeur à vis (9) pour transporter les boues semi-sèches dans le mélangeur à vis (9), de sorte que les boues semi-sèches et le laitier granulaire à haute température (6) soient mélangées dans le mélangeur à vis (9) pour former un mélange de scories et de boues ; dans lequel un orifice de décharge du mélangeur à vis (9) est couplé à un orifice d'alimentation du séchoir à boues (10) pour transporter le mélange de scories et de boues dans le séchoir à boues (10) ; dans lequel un orifice de décharge du séchoir à boues (10) est couplé à un orifice d'alimentation du module de récupération des scories et des boues afin de transporter une poudre de boues sèches et des granulés de scories dans le module de récupération des scories et des boues ; dans lequel une entrée de gaz du module de traitement des gaz résiduaires est couplée à une sortie de gaz du module de préséchage des boues, à une sortie de gaz du séchoir à boues (10) et à une sortie de gaz du module de récupération des scories et des boues.

3. L'appareil pour la granulation d'un laitier de haut fourneau et le recyclage de la chaleur perdue selon la revendication 1, dans lequel le dispositif de récupération de la chaleur perdue est un module de préparation de vapeur à haute température, dans lequel le module de préparation de vapeur à haute température est couplé au séparateur cyclone (8) pour récupérer la chaleur du gaz à température moyenne à élevée et du laitier granulaire à haute température (6) adaptée pour préparer une vapeur à haute température ayant une température de 200 à 250 °C ; dans lequel une sortie de gaz résiduel du module de préparation de vapeur à haute température est couplée à un module de traitement de gaz résiduel.

4. L'appareil pour la granulation d'un laitier de haut fourneau et le recyclage de la chaleur perdue selon la revendication 3, dans lequel le module de préparation de vapeur à haute température comprend un bac à scories (11), un dispositif de traitement des gaz résiduels (17), un épurateur de gaz (18), un extracteur (19), une cheminée (20), un convoyeur d'alimentation à haute température (21), un échangeur de chaleur à scories granulaires à haute température (22), une chaudière (23) et un économiseur (24) ; dans lequel le convoyeur d'alimentation à haute température (21) est prévu entre l'orifice de décharge du séparateur cyclone (8) et un orifice d'alimentation de l'échangeur de chaleur à scories granulaires à haute température (22) pour transporter le laitier granulaire à haute température (6) séparées par le séparateur cyclone (8) vers une partie supérieure de l'échangeur de chaleur à scories granulaires à haute température (22) ; un serpentin contenant de l'eau en circulation est prévu dans l'échangeur de chaleur à scories granulaires à haute température (22) pour l'échange de chaleur inverse entre le serpentin et un flux de gaz s'élevant du bas vers le haut avec le laitier granulaire à haute température (6) ; le bac à scories (11) est prévu sous un orifice de décharge situé au fond de l'échangeur de chaleur à scories granulaires à haute température (22) pour recevoir les scories granulaires après refroidissement ; une partie supérieure de l'échangeur de chaleur à scories granulaires à haute température (22) est pourvue d'un orifice de gaz qui est couplé à la chaudière (23) ; l'économiseur (24) est couplé respectivement à la chaudière (23) et à l'échangeur de chaleur à scories granulaires à haute température (22), adapté pour envoyer de l'eau pure à l'économiseur (24) par l'intermédiaire d'un réseau de tuyaux externes, est préchauffé à 80 °C ou plus par un gaz résiduel émis par la chaudière (23), et divisée en deux parties, une partie étant envoyée dans la chaudière (23) et l'autre partie entrant dans le serpentin de l'échangeur de chaleur à scories granulaires à haute température (22) pour absorber la chaleur du laitier granulaire à haute température (6) ; dans lequel une entrée de gaz du dispositif de traitement des gaz résiduaires (17) est couplée à une sortie de gaz résiduaires de l'économiseur (24), une sortie de gaz du dispositif de traitement des gaz résiduaires (17) est couplée à une entrée de gaz du purificateur de gaz résiduaires (18), et une sortie de gaz du purificateur de gaz résiduaires (18) est couplée à la cheminée (20) par l'intermédiaire de l'extracteur (19) pour la purification et l'évacuation des gaz résiduaires.

5. L'appareil pour la granulation d'un laitier de haut fourneau et le recyclage de la chaleur perdue selon la revendication 4, comprenant en outre un tambour à vapeur dans une partie supérieure de la chaudière (23), adapté pour mélanger l'eau vaporisée dans le serpentin et dont la température est élevée à environ 250 °C avec la vapeur générée par la chaudière (23) elle-même et pour incorporer la vapeur mélangée dans le réseau de tuyaux externe.

6. L'appareil pour la granulation d'un laitier de haut fourneau et le recyclage de la chaleur perdue selon la revendication 1, dans lequel le dispositif de récupération de la chaleur perdue est un module de préparation d'eau chaude à basse température, dans lequel le module de préparation d'eau chaude à basse température est couplé au séparateur cyclone (8) pour récupérer la chaleur du gaz à température moyenne à élevée et du laitier granulaire à haute température (6) adaptés pour préparer de l'eau chaude à basse température ayant une température de 70 à 95 °C ; dans lequel une sortie de gaz résiduel du module de préparation d'eau chaude à basse température est couplée à un module de traitement des gaz résiduels.

7. L'appareil pour la granulation d'un laitier de haut fourneau et le recyclage de la chaleur perdue selon la revendication 5, dans lequel le module de préparation d'eau chaude à basse température comprend un bac à scories (11), un dispositif de traitement des gaz résiduels (17), un épurateur de gaz (18), un extracteur (19), une cheminée (20), un convoyeur d'alimentation à haute température (21), un échangeur de chaleur à scories granulaires à haute température (22) et une chaudière (23) ;
dans lequel le convoyeur d'alimentation à haute température (21) est prévu entre l'orifice de décharge du séparateur cyclone (8) et un orifice d'alimentation de l'échangeur de chaleur à scories granulaires à haute température (22) pour transporter le laitier granulaire à haute température (6) séparées par le séparateur cyclone (8) vers une partie supérieure de l'échangeur de chaleur à scories granulaires à haute température (22) ; un serpentin contenant de l'eau en circulation est prévu dans l'échangeur de chaleur à scories granulaires à haute température (22) pour l'échange de chaleur inverse du laitier granulaire à haute température (6) avec le serpentin et un flux de gaz s'élevant du bas vers le haut ; le bac à scories (11) est prévu sous un orifice de décharge situé au fond de l'échangeur de chaleur à scories granulaires à haute température (22) pour recevoir les scories granulaires après refroidissement ; une partie supérieure de l'échangeur de chaleur à scories granulaires à haute température (22) est pourvue d'un orifice de gaz qui est couplé à la chaudière (23) ; la chaudière (23) et l'échangeur de chaleur à scories granulaires à haute température (22) sont respectivement couplés à un réseau de tuyaux externe pour recevoir de l'eau pure pour l'échange de chaleur dans la chaudière (23) et l'échangeur de chaleur à scories granulaires à haute température (22) ; dans lequel une entrée de gaz du dispositif de traitement des gaz résiduaires (17) est couplée à une sortie de gaz résiduaires de la chaudière (23), une sortie de gaz du dispositif de traitement des gaz résiduaires (17) est couplée à une entrée de gaz du purificateur de gaz résiduaires (18), et une sortie de gaz du purificateur de gaz résiduaires (18) est couplée à la cheminée (20) par l'intermédiaire de l'extracteur (19) pour la purification et l'évacuation des gaz résiduaires.

8. L'appareil pour la granulation d'un laitier de haut fourneau et le recyclage de la chaleur perdue selon la revendication 2, dans lequel le module de traitement des gaz résiduels comprend un dispositif de traitement des gaz résiduels (17), un épurateur de gaz résiduel (18), un extracteur (19) et une cheminée (20), dans lequel une entrée de gaz du dispositif de traitement des gaz résiduels (17) est couplée à la sortie de gaz du module de préséchage des boues, la sortie de gaz du séchoir à boues (10) et la sortie de gaz du module de récupération des scories et des boues par des tuyaux respectifs, dans lequel une sortie de gaz du dispositif de traitement des gaz résiduaires (17) est couplée à une entrée de gaz du purificateur de gaz résiduaires (18), dans lequel une sortie de gaz du purificateur de gaz résiduaires (18) est couplée à la cheminée (20) par l'intermédiaire de l'extracteur (19).

9. Un procédé de granulation et de recyclage de la chaleur perdue utilisant l'appareil de granulation d'un laitier de haut fourneau et de recyclage de la chaleur perdue selon la revendication 1, dans lequel le procédé comprend les étapes suivantes :
Étape 1 : laisser le laitier de haut fourneau séparé du fer fondu entrer dans un canal de laitier où un flux de laitier (1) est formé et s'écoule dans un guide d'écoulement (7) après que son écoulement a été contrôlé par un contrôleur d'écoulement de laitier (2) ;
Étape 2 : régler une vanne de régulation du débit d'air comprimé (3) et une vanne de régulation du débit d'eau (4) pour former un aérosol à haute pression dans un pistolet de pulvérisation d'aérosol (5) et pulvériser l'aérosol à haute pression à travers une buse, de sorte que l'aérosol à haute pression heurte le flux de scories (1) s'écoulant dans le guide d'écoulement (7) pour former un gaz à température moyenne et du laitier granulaire à haute température (6) ayant une surface préalablement solidifiée ;
Étape 3 : mélanger et échanger thermiquement le gaz à température moyenne et le laitier granulaire à haute température (6) ayant une surface préalablement solidifiée à travers le guide d'écoulement (7) pour former un laitier granulaire à haute température complètement solidifié (6) et un gaz à température moyenne à élevée qui sont transportés vers un séparateur cyclone (8) par lequel le laitier granulaire à haute température (6) et le gaz à température moyenne à élevée sont séparés ;
Étape 4 : transporter le gaz à température moyenne à élevée et le laitier granulaire à haute température (6) vers un dispositif de récupération de chaleur résiduelle à partir du séparateur cyclonique (8), dans lequel la chaleur du gaz à température moyenne à élevée et du laitier granulaire à haute température (6) est récupérée par le dispositif de récupération de chaleur résiduelle et utilisée pour le séchage des boues, la préparation de vapeur à haute température, la production d'électricité ou la préparation d'eau chaude à basse température ;
dans lequel, après avoir été formé par projection de l'aérosol provenant du module de buses de granulation d'aérosol sur le flux de scories (1), le gaz à température moyenne a une température de 200 à 400 °C, et le laitier granulaire à haute température (6) ayant une surface préalablement solidifiée ont une température de 1000 à 1200 °C ; dans lequel, après avoir été mélangé dans le guide d'écoulement (7), le gaz à température moyenne à élevée a une température de 300 à 500 °C, et le laitier granulaire à haute température (6) complètement solidifié a une température de 800 à 1100 °C ; dans lequel, après séparation par le séparateur cyclone (8), le laitier granulaire à haute température (6) a une température de 700 à 950 °C, et le gaz à température moyenne à élevée a une température de 350 à 550 °C.

10. Le procédé de granulation et de recyclage de la chaleur perdue utilisant l'appareil de granulation d'un laitier de haut fourneau et de recyclage de la chaleur perdue selon la revendication 9, dans lequel l'étape de séchage des boues comprend :
Étape 4.1.1 : pomper une boue humide depuis un réservoir de boues (16) à l'aide d'une pompe à boues (15) vers un pré-séchoir à boues (14) ;
Étape 4.1.2 : mélanger et échanger thermiquement de manière inverse la boue humide avec le gaz à température moyenne à élevée dans le pré-séchoir à boues (14) pour former une boue semi-sèche ;
Étape 4.1.3 : transporter les boues semi-sèches du module de pré-séchage des boues vers un mélangeur à vis (9), et transporter le laitier granulaire à haute température (6) du séparateur cyclone (8) vers le mélangeur à vis (9), où les boues semi-sèches et le laitier granulaire à haute température (6) sont mélangées par le mélangeur à vis (9) pour former un mélange scories-boues ;
Étape 4.1.4 : transporter le mélange de scories et de boues du mélangeur à vis (9) vers un séchoir à boues (10), dans lequel le séchoir à boues (10) sèche le mélange de scories et
de boues pour obtenir une poudre de boues sèches et des granulés de scories qui sont transportés vers un module de récupération des scories et des boues ;
Étape 4.1.5 : séparer la poudre de boue sèche des granulés de scories dans un séparateur de scories-boues (13) du module de récupération des scories-boues ;
Étape 4.1.6 : transporter la poudre de boue sèche du séparateur de boues (13) vers un bac à poudre de boue sèche (12) pour un stockage temporaire ;
Étape 4.1.7 : transporter les granulés de scories du séparateur de boues (13) vers un bac à scories (11) pour un stockage temporaire ;
dans lequel le procédé comprend en outre la purification et l'évacuation d'un gaz résiduaire humide à l'aide d'un module de traitement des gaz résiduaires, comprenant : la collecte et le prétraitement du gaz résiduaire humide provenant du pré-séchoir à boues (14), du séchoir à boues (10) et du séparateur de scories-boues (13) à l'aide d'un dispositif de traitement des gaz résiduaires (17) du module de traitement des gaz résiduaires, puis purification en profondeur à l'aide d'un purificateur de gaz résiduaires (18), dans lequel les gaz résiduaires purifiés conformément à la norme sont évacués par une cheminée (20) à l'aide d'un extracteur (19) ; et la poudre fine collectée dans le dispositif de traitement des gaz résiduaires (17) et le purificateur de gaz résiduaires (18) est extraite à l'aide d'un camion-citerne externe.

11. Le procédé de granulation et de recyclage de la chaleur perdue utilisant l'appareil de granulation d'un laitier de haut fourneau et de recyclage de la chaleur perdue selon la revendication 9, dans lequel l'étape de préparation de vapeur à haute température comprend :
Étape 4.2.1 : transporter le laitier granulaire à haute température (6) depuis le séparateur cyclonique (8) vers un convoyeur de laitier granulaire à haute température (21) qui soulève le laitier granulaire à haute température (6) et l'achemine vers un échangeur de chaleur à laitier granulaire à haute température (22) depuis une entrée supérieure de l'échangeur de chaleur à laitier granulaire à haute température (22), dans lequel le laitier granulaire à haute température (6) se déplacent de haut en bas et, au cours de leur descente, entrent en contact et échangent de la chaleur à contre-courant avec l'eau de refroidissement dans un serpentin et l'air montant de bas en haut ;
Étape 4.2.2 : évacuer la vapeur chauffée par le haut de l'échangeur de chaleur à scories granulaires à haute température (22) et l'envoyer vers une chaudière (23), et évacuer les scories granulaires refroidies par la partie inférieure de l'échangeur de chaleur à scories granulaires à haute température vers un bac à scories (11) ;
Étape 4.2.3 : envoyer l'eau pure fournie par un réseau de canalisations externe vers un économiseur (24) afin qu'elle soit préchauffée à 80 °C ou plus par les gaz résiduels évacués de la chaudière (23), une partie de l'eau pure étant envoyée vers la chaudière (23) pour être chauffée davantage et vaporisée en vapeur à une température de 200 à 250 °C,
et l'autre partie entrant dans le serpentin de l'échangeur de chaleur à scories granulaires à haute température (22) pour absorber la chaleur du laitier granulaire à haute température (6) ;
Étape 4.2.4 : envoyer l'eau dans le serpentin vers un tambour à vapeur situé dans la partie supérieure de la chaudière (23) après qu'elle ait été vaporisée et chauffée à environ 250 °C, où elle est mélangée à la vapeur générée dans la chaudière (23) elle-même, puis intégrée dans le réseau de tuyaux externe.

12. Le procédé de granulation et de recyclage de la chaleur perdue utilisant l'appareil de granulation d'un laitier de haut fourneau et de recyclage de la chaleur perdue selon la revendication 9, dans lequel l'étape de préparation d'eau chaude à basse température comprend :
Étape 4.3.1 : transporter le laitier granulaire à haute température (6) depuis le séparateur cyclonique (8) vers un convoyeur de laitier granulaire à haute température (21) qui soulève le laitier granulaire à haute température (6) et l'achemine vers un échangeur de chaleur à laitier granulaire à haute température (22) depuis une entrée supérieure de l'échangeur de chaleur à laitier granulaire à haute température (22), dans lequel le laitier granulaire à haute température (6) se déplacent de haut en bas et, au cours de leur descente, entrent en contact et échangent de la chaleur à contre-courant avec l'eau de refroidissement dans un serpentin et l'air qui monte de bas en haut ;
Étape 4.3.2 : décharger l'eau chaude à basse température chauffée à une température de 70 à 95 °C depuis le haut de l'échangeur de chaleur à scories granulaires à haute température (22) et l'envoyer vers une chaudière (23), et décharger les scories granulaires refroidies depuis la partie inférieure de l'échangeur de chaleur à scories granulaires à haute température vers un bac à scories (11) ;
Étape 4.3.3 : envoyer une partie de l'eau pure provenant d'un réseau de canalisations externe vers la chaudière (23) afin qu'elle soit chauffée à une température de 70 à 95 °C par un gaz passant à travers la chaudière (23), et envoyer l'autre partie vers le serpentin de l'échangeur de chaleur à scories granulaires à haute température (22) afin d'absorber la chaleur du laitier granulaire à haute température (6) ;
Étape 4.3.4 : envoyer l'eau contenue dans le serpentin vers un tambour à vapeur situé dans la partie supérieure de la chaudière (23) après qu'elle ait été chauffée en absorbant la chaleur, où elle est mélangée à l'eau chaude générée dans la chaudière (23) elle-même, puis intégrée dans le réseau de canalisations externe.
